# EUROPEAN PATENT APPLICATION

(11) **EP 2 586 560 A1**
(43) Date of publication of application: **01.05.2013**
(21) Application number: 11798226.4
(22) Date of filing: 23.06.2011
(51) Int. Cl.: B23K 20/00, B23K 11/12, B23K 20/10, B23K 20/24

(54) **JOINING METHOD AND JOINING APPARATUS**

(30) Priority: 15.12.2010 JP 2010279811; 24.06.2010 JP 2010143880
(71) Applicant: Nissan Motor Co., Ltd, Yokohama-shi, Kanagawa 221-0023 (JP)
(72) Inventor: FUKAMI, Toru, Atsugi-shi Kanagawa 243-0123 (JP); USHIJIMA, Kenshi, Atsugi-shi Kanagawa 243-0123 (JP); KONDO, Masahiko, Atsugi-shi Kanagawa 243-0123 (JP); MIZUNO, Hideaki, Atsugi-shi Kanagawa 243-0123 (JP); MOTEKI, Katsuya, Atsugi-shi Kanagawa 243-0123 (JP)
(74) Representative: Grünecker, Kinkeldey, Stockmair & Schwanhäusser
(86) International application number: PCT/JP2011/064434
(87) International publication number: WO 2011/162345

(57) **Abstract**

Joining surfaces (2a, 2b) of a pair of conductive joining members (1a, 1b) to be joined to each other are caused to face each other, and while one of the joining members (1a, 1b) is slid relative to the other of the joining members (1a, 1b), a current is passed from one of the joining members (1a, 1b) to the other of the joining members (1a, 1b) so as to cause resistance heating. Abrasion, plastic flow, and material diffusion therefore occur in high surface-pressure sections of the joining surfaces (2a, 2b), and the joining surfaces (2a, 2b) are joined together while current concentration locations are varied from moment to moment.

## Description

### TECHNICAL FIELD

The present invention relates to a joining method and a joining apparatus using resistance heating and vibration friction.

### BACKGROUND ART

Heretofore, resistance welding has been used as a method for joining conductive metallic materials to each other. The resistance welding is a method which involves sandwiching conductive metallic materials in contact with each other in between electrodes, fleeding a current from the electrodes to the conductive metallic materials, and thereby fusion-joining the conductive metallic materials together by resistance heating produced by contact resistance of joining surfaces. Patent Literature I discloses a method which involves applying vibration to a pair of conductive metallic materials to be joined, in contact with each other, peeling off insulating coatings on surfaces and then stopping the vibration, and fusion-joining the conductive metallic materials by resistance heating.

### CITATION LIST

### PATENT LITERATURE

Patent Literature 1: Japanese Patent Application Publication No. 11-138275

### SUMMARY OF INVENTION

### TECHNICAL PROBLEM

However, in the method disclosed in Patent Literature 1, the current, when supplied, concentrates in high surface-pressure sections of the joining surfaces, and therefore, the joining surfaces are not heated in their regions where little current flows, so that the joining surfaces can be joined only in a limited area and shape.

The present invention has been made in order to solve the foregoing problem. An object of the present invention is to provide a joining method and a joining apparatus capable of uniformly joining the joining surfaces throughout their entire area.

### SOLUTION TO PROBLEM

A joining method according to the present invention to attain the above object is a joining method for joining a pair of conductive joining members. The joining method includes causing joining surfaces of the joining members to be joined to each other to face each other, and joining the joining surfaces together by resistance heating by passing a current from one of the joining members to the other of the joining members, while sliding a pair of the joining members relative to each other.

A joining apparatus according to the present invention to attain the above object is a joining apparatus for joining a pair of conductive joining members, The joining apparatus includes a pair of electrodes configured to supply a current to the pair of joining members, respectively; a current supply means for supplying a current to the electrodes; and a sliding means for sliding the pair of joining members relative to each other. The joining apparatus further includes a control means for controlling the current supply means and the sliding means so as to perform resistance heating between the joining surfaces by supplying the current to the electrodes, while sliding the joining members relative to each other, with the joining surfaces facing each other.

Also, according to another aspect of a joining method according to the present invention to attain the above object, there is provided a joining method including: causing joining surfaces of conductive joining members to be joined to each other to face each other, and joining the joining surfaces together by resistance heating by passing a current from one of the joining members to the other of the joining members, while sliding a pair of the joining members relative to each other. In the joining method, plural current input paths to the joining members are provided, and, when a current is passed through the joining members, a current input value of at least one of the current input paths is controlled.

Also, according to another aspect of a joining apparatus according to the present invention to attain the above object, there is provided a joining apparatus for joining a pair of conductive joining members. The joining apparatus includes current input units configured to define plural current input paths to the joining members and to be capable of adjusting the amount of current of at least one of the current input paths, and a current supply means for supplying a current to the current input units. The joining apparatus further includes a control means for controlling the current supply means and the sliding means so as to perform resistance heating by passing a current from one of the joining members to the other of the joining members, while sliding the pair of joining members relative to to each other, with the joining surfaces of the joining members to be joined to each other caused to face each other.

### BRIEF DESCRIPTION OF DRAWINGS

[Fig. 1] Fig. 1 is a schematic side view illustrating a joining apparatus for conductive materials according to an embodiment of the present invention.
[Fig. 2] Fig. 2 is an enlarged partial side view illustrating the vicinity of electrodes of the joining apparatus for conductive materials according to the embodiment of the present invention.
[Fig. 3] Fig. 3 is a cross-sectional view taken along line III-III of Fig. 1.
[Fig. 4] Fig. 4 is a cross-sectional view taken along line IV-IV of Fig. 1.
[Fig. 5] Fag. 5 is a schematic view illustrating, in diagrammatic form, current paths in the vicinity of the electrodes of the joining apparatus for conductive materials according to the embodiment of the present invention.
[Fig. 6] Fig. 6 is a flowchart of joining by the joining apparatus for conductive materials according to the embodiment of the present invention.
[Fig. 7] Fig. 7 is a graph illustrating an example of operating conditions for the joining apparatus for conductive materials according to the embodiment of the present invention.
[Fig. 8] Fig. 8 is a cross-sectional view of the vicinity of a joining surface of a joining member in the form of circular tube in cross section.
[Fig. 9] Figs. 9(A) and 9(B) are cross-sectional views of the vicinity of joining surfaces of joining members in the form of double tube in cross section, illustrating the joining members which are circular and rectangular, respectively, in cross section.
[Fig. 10] Figs. 10(A) and 10(B) are cross-sectional views of the vicinity of joining surfaces of joining members without a non-contact portion, illustrating the joining members which are circular and rectangular, respectively, in cross section.
[Fig. 11] Fig. 11 is a cross-sectional view of the vicinity of a joining surface of a joining member having a solid portion formed in the circular tube.
[Fig. 12] Fig. 12 is a cross-sectional view of the vicinity of a joining surface of a joining member having two non-contact portions arranged side by side in rectangular cross section.
[Fig. 13] Fig. 13 is a schematic side view illustrating a joining apparatus, which is of assistance in explaining basic principles of a joining method for use in a second embodiment.
[Fig. 14] Fig. 14 is a flowchart of the joining method for use in the second embodiment.
[Fig. 15] Fig. 15 is an enlarged partial side view illustrating the vicinity of electrodes of the joining apparatus according to the second embodiment.
[Fig. 16] Fig. 16 is a flowchart of assistance in explaining a first joining step in the second embodiment.
[Fig. 17] Fig. 17 is an enlarged partial side view of the vicinity of electrodes, illustrating another example of the joining apparatus according to the second embodiment.
[Fig. 18] Fig. 18 is an enlarged partial side view of the vicinity of electrodes, illustrating still another example of the joining apparatus according to the second embodiment.
[Fig. 19] Fig. 19 is a cross-sectional view taken along line XIX-XIX of Fig. 18.
[Fig. 20] Fig. 20 is an enlarged partial side view illustrating the vicinity of electrodes of a joining apparatus according to a third embodiment.
[Fig. 21] Fig. 21 is a flowchart of assistance in explaining a first joining step in the third embodiment.

### DESCRIPTION OF EMBODIMENTS

Embodiments of the present invention will be described bellow with reference to the drawings. Incidentally, dimensional ratios in the drawings are exaggerated for convenience of explanation, and, in some of the drawings, are different from actual ratios.

### [First Embodiment]

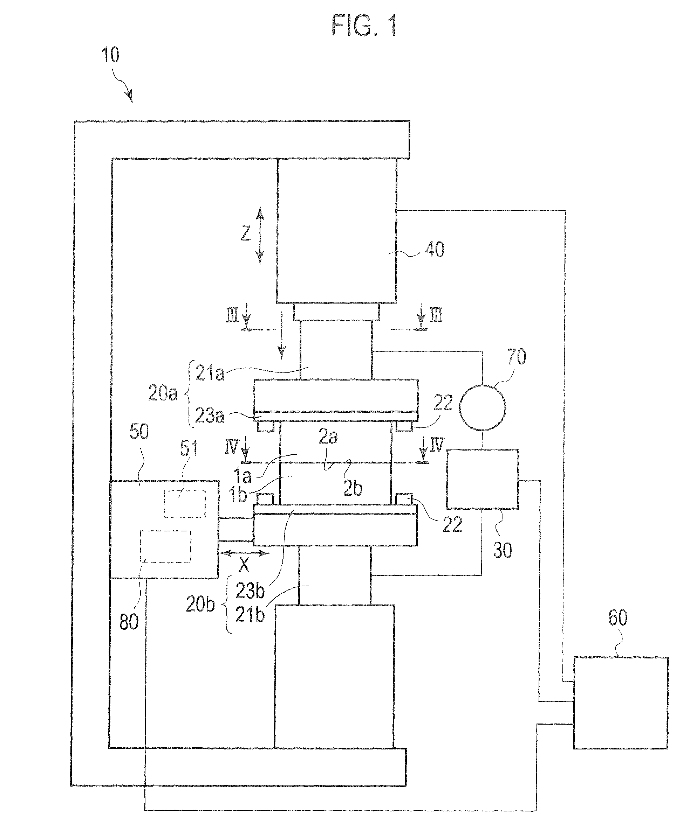

A joining apparatus 10 for conductive materials according to a first embodiment of the present invention is an apparatus for joining a pair of conductive joining members 1a, 1b to each other, as illustrated in Figs. 1 to 4. The joining apparatus 10 joins the joining members 1a, 1b together by holding the joining members 1a, 1b with their joining surfaces 2a, 2b to be joined to each other caused to face each other, and subjecting the joining members 1a, 1b to resistance heating, while sliding the joining members 1a, 1b relative to each other in a direction X along the joining surfaces 2a, 2b, as well as applying pressure in a joining surface direction Z (i.e. a direction of a normal to the joining surfaces 2a, 2b).

The joining apparatus 10 includes paired electrodes 20a, 20b (or current input units) which contact the pair of joining members 1a, 1b, respectively, a current supply device 30 (or a current supply means) for feeding a current to the electrodes 20a, 20b, and a pressing device 40 (or a pressing means) for pressing the electrodes 20a, 20b against the joining members 1a, 1b in the joining surface direction Z thereof. Further, the joining apparatus 10 includes a vibrating device 50 (or a vibrating means or a sliding means) for vibrating (or sliding) the joining member 1b, and a control device 60 (or a control means) for controlling the joining apparatus 10.

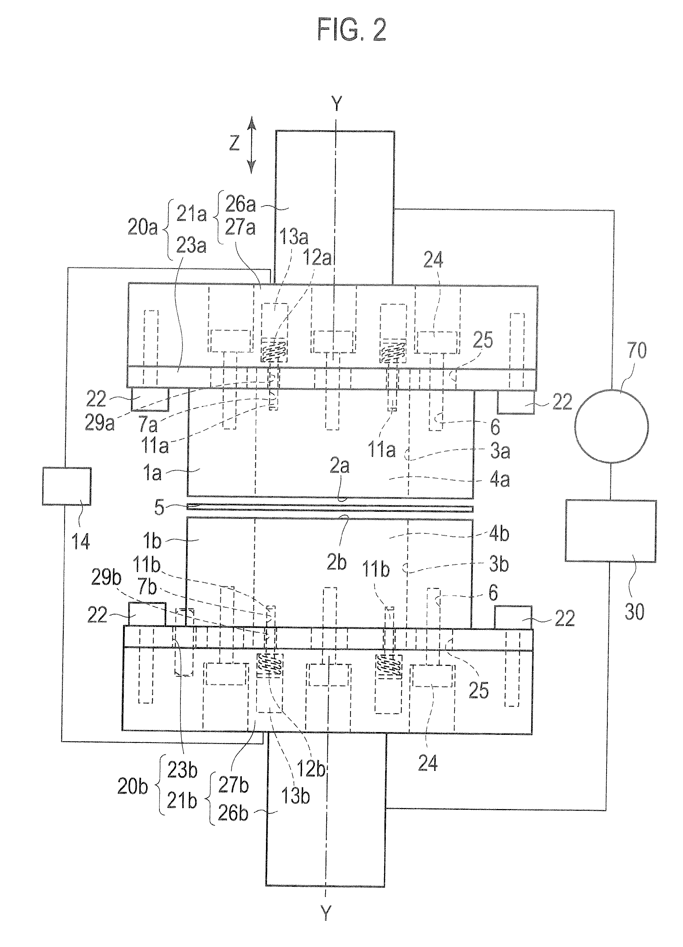

In the first embodiment, the joining members 1a, 1b are formed by conductive material in the form of hollow of rectangular cross section, provided with through-holes 3a, 3b formed through the conductive material in the joining surface direction Z, as illustrated in Figs. 2 to 4. Therefore, when the joining surfaces 2a, 2b of the joining members 1a, 1b are arranged in contact facing each other, non-contact portions 4a, 4b spaced apart without contact to form a space area are provided in such a way as to be surrounded by the joining surfaces 2a, 2b, respectively. An extension line from a central axis Y of the electrodes 20a, 20b lies in the non-contact portions 4a, 4b rather than the joining surfaces 2a, 2b. Incidentally, the non-contact portions 4a, 4b may be of any configuration, provided that the non-contact portions 4a, 4b are spaced apart without contact when the joining surfaces 2a, 2b are arranged in contact facing each other; for example, any one of the through-holes 3a, 3b may be provided only in any one of the joining members 1a, 1b. Also, the non-contact portions 4a, 4b may be configured as recess portions rather than the through-holes.

The joining members 1a, 1b are not particularly limited, provided that the joining members 1a, 1b are made of conductive material; however, cast aluminum (Al) is used in the first embodiment.

As illustrated in Fig. 2, eutectic foil 5 (as an intermediate material) in the form of conductive foil made of a eutectic reaction material which undergoes eutectic reaction with the joining members 1a, 1b is sandwiched in between the pair of joining members 1a, 1b. Preferably, the eutectic foil 5 is formed in coincidence with the shape of the joining surfaces 2a, 2b; in the first embodiment, the eutectic foil 5 is formed in the shape of a rectangular ring. When the joining members 1a, 1b are made of aluminum, zinc (Zn), silicon (Si) or the like which undergoes eutectic reaction with the aluminum is available for the eutectic foil 5. Preferably, the eutectic foil 5 has a thickness of 10 to 100 µm, for example; however, the thickness is not so limited but may also be uniform or vary according to part. Also, the provision of the eutectic foil 5 is not necessarily required.

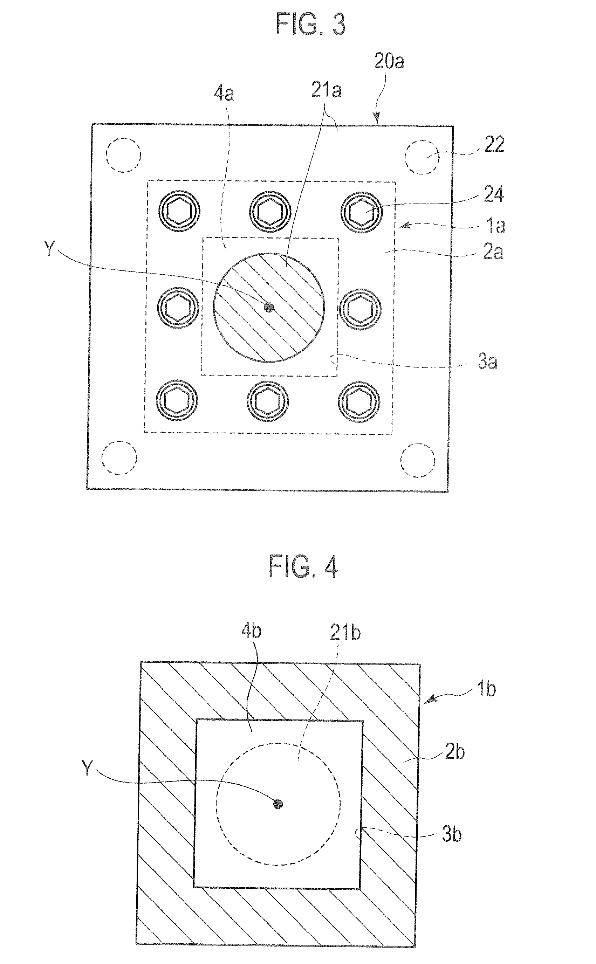

The electrodes 20a, 20b include electrode bodies 21a, 21b, respectively, and electrode plates 23a, 23b, respectively, and the electrode plates 23a, 23b are linked to the electrode bodies 21a, 21b, respectively, on their surfaces facing the joining members 1a, 1b by plural (e.g. four in the first embodiment) electrode plate fixing bolts 22. As illustrated in Fig. 2, the electrode bodies 21a, 21b are formed by axial portions 26a, 26b, respectively, extending axially, and fixing portions 27a, 27b, respectively, on which the electrode plates 23a, 23b are fixed. The electrode bodies 21a, 21b do not come in direct contact with the joining members 1a, 1b, and the electrode plates 23a, 23b come in contact with the joining members 1a, 10b, respectively. Joining member fixing bolts 24 can be inserted into the fixing portions 27a, 27b of the electrode bodies 21a, 21b on the opposite side of the electrode bodies 21a, 21b from the side thereof facing the joining members 1a, 1b, and the joining members 1a, 1b can be fastened to the electrode bodies 21a, 21b, respectively, by axial forces by strewing the joining member fixing bolts 24 into screw holes 6 formed in the joining members 1a, 1b. The joining members 1a, 1b are fastened to the electrodes 20a, 20b, respectively, by plural (e.g. eigth in the first embodiment) joining member fixing bolts 24 (or current path adjusting means or fastening units) (see Fig. 3), and axial fastening forces can be individually varied. In the first embodiment, the electrode bodies 21a, 21b also have the function of serving as holding members to hold the joining members 1a, 1b such that the joining members 1a, 1b are slidable with respect to each other.

As illustrated in Fig. 2, the joining members 1a, 1b are provided with positioning holes 7a, 7b, respectively, as positioning portions, formed in surfaces facing the electrodes 20a, 20b, and positioning pins 11a, 11b for positioning, as positioning members, can be fitted in the positioning holes 7a, 7b, respectively. The electrode plates 23a, 23b are provided with through-holes 29a, 29b, respectively, through which the positioning pins 11a, 11b pass. The positioning pins 11a, 11b are provided within the fixing portions 27a, 27b, respectively, of the electrode bodies 21a, 21b so as to be capable of being projected from and withdrawn to the surfaces facing the joining members 1a, I b. The positioning pins 11a, 11b are biased in a direction of withdrawal (or backward) by spring members 12a, 12b, respectively, and fluid supply units 13a, 13b supplied with a fluid from a positioning member actuator 14 (or a positioning member actuating means) as an external hydraulic pressure source or air pressure source are formed rearward of the positioning pins 11a, 11b, respectively, The positioning member actuator 14 is driven under control by the control device 60 thereby to supply the fluid to the fluid supply units 13a, 13b or discharge the fluid from the fluid supply units 13a, 13b and thereby effect the advancing and retreating of the positioning pins 11a, 11b. Therefore, the positioning pins 11a, 11b are projected from the fixing portions 27a, 27b, respectively, and inserted into the positioning holes 7a, 7b, respectively, of the joining members 1a, 1b by the positioning member actuator 14 thereby to enable accurate positioning of the joining members 1a, I b with respect to the electrodes 20a, 20b, respectively. This enables accurate positioning of the relative positions of the joining member 1a and the joining member 1b.

The positioning pins 11a, 11b are made of a material having a higher electrical resistance value than that of the electrodes 20a, 20b and the joining members 1a, 1b. The positioning pins 11a, 11b are made of an insulating material such for example as resin. Alternatively, as an example, when the electrodes 20a, 20b are made of copper and the joining members 1a, 1b are made of aluminum, the positioning pins 11a, 11b may also be made of a conductive material such as iron.

Preferably, the electrode plates 23a, 23b are made of the same material as that for the electrode bodies 21a, 21b or a similar material thereto. Preferably, bolt through-holes 25 (see Fig. 2) of the electrode plates 23a, 23b, through which the joining member fixing bolts 24 pass, have a sufficiently larger hole diameter than the diameter of the joining member fixing bolts 24. When the diameter of the bolt through-holes 25 is substantially the same as the diameter of the joining member fixing bolts 24, a flow of current concentrates in the vicinity of the screw holes 6 of the joining members 1a, 1b, into which the joining member fixing bolts 24 are screwed, and hence imposes loads on the screw holes 6; however, the hole diameter, if sufficiently larger than the diameter of the joining member fixing bolts 24, renders it difficult for a current to flow into the screw holes 6 and thus enables suppressing the occurrence of damage to the screw holes 6.

Incidentally, the joining member fixing bolts 24 are made of a material which makes it more difficult for a current to flow therethrough than that for the electrode bodies 21a, 21b and the electrode plates 23a, 23b, and have a structure such that it is difficult for the joining member fixing bolts 24 to become conductive media when a current is passed between the electrodes 20a, 20b and the joining member fixing bolts 24.

The electrode plates 23a, 23b are sandwiched in between the electrode bodies 21a, 21b and the joining members 1a, 1b, and thus, contact resistance across the electrode bodies 21a, 21b and the electrode plates 23a, 23b and contact resistance across the electrode plates 23a, 23b and the joining members 1a, 1b are present when a current flows from the electrodes 20a, 20b to the joining members 1a, 1b. Therefore, a configuration having two contact resistances connected in series results, thus increasing total contact resistance for the same axial fastening force, as compared to a configuration in which the electrode plates 23a, 23b are absent and the electrode bodies 21a, 21b come in direct contact with the joining members 1a, 1b, respectively. Therefore, as for total contact resistance across the electrodes 20a, 20b and the joining members 1a, 1b, the provision of the electrode plates 23a, 23b increases contact resistance sensitivity to the axial fastening force to thus expand the range of adjustment of contact resistance by varying the axial fastening force. Also, the electrode plates 23a, 23b are disposed between the electrode bodies 21a, 21b and the joining members 1a, 1b thereby to enable suppressing the melting of the difficult-to-replace electrode bodies 21a, 21b by resistance heating across the electrode bodies 21a, 21b and the joining members 1a, 1b. Incidentally, the electrode plates 23a, 23b may be provided in plural stacked layers in order to achieve a further increase in the contact resistance sensitivity.

The pressing device 40 is a device for pressing the pair of joining members 1a, 1b in the joining surface direction Z through the electrodes 20a, 20b, and has a hydraulic cylinder or the like, for example, built-in. The pressing device 40 is connected to the control device 60 and configured to be capable of arbitrarily controlling applied pressure.

The vibrating device 50 is a device for vibrating one of the pair of joining members 1a, 1b in the direction X along the joining surfaces 2a, 2b (i.e. a direction orthogonal to the normal to the joining surfaces). A mechanism of the vibrating device 50 is based on ultrasonic vibration, electromagnetic vibration, cam-actuated vibration, or the like, for example. The vibrating device 50 is connected to the control device 60 and configured to be capable of arbitrarily controlling a frequency of vibration, amplitude of vibration, a vibrating force, and the like. The vibrating device 50 includes a displacement detector 51 (see Fig. 1) for detecting a displacement of the joining member 1b being slid. The displacement defector 51 is a displacement sensor, or an encoder for displacement detection, for example.

The current supply device 30 is a device capable of feeding a DC current or an AC current to the electrodes 20a, 20b, and is connected to the control device 60 and configured to be capable of arbitrarily controlling a current value and a voltage value.

The control device 60 is an electronic computer which performs centralized control on the pressing device 40, the vibrating device 50, the current supply device 30 and the positioning member actuator 14. The control device 60 includes a processing unit, a storage unit, an input unit, and an output unit. A program to control the overall joining apparatus 10 is stored in the storage unit, and the program is executed by the processing unit thereby to cause the joining apparatus 10 to proceed with a step S2 of joining the joining members 1a, 1b.

A contact resistance detecting device 70 (or a contact resistance detector) is provided in a path through which a current flows from the current supply device 30 to the electrodes 20a, 20b. The contact resistance detecting device 70 serves as botch a volt meter and an ammeter to measure changes in voltage and current and thereby enable detecting a value of contact resistance across the joining members 1a, 1b. A detection signal from the contact resistance detecting device 70 is inputted to the control device 60. Incidentally, the contact resistance detecting device 70 may be placed in other locations, provided that the contact resistance across the joining members 1a, I b can be detected.

The vibrating device 50 is provided with a frictional force detecting device 80 which detects a frictional force between the joining surfaces 2a, 2b from a vibrating force. A detection signal from the frictional force detecting device 80 is inputted to the control device 60.

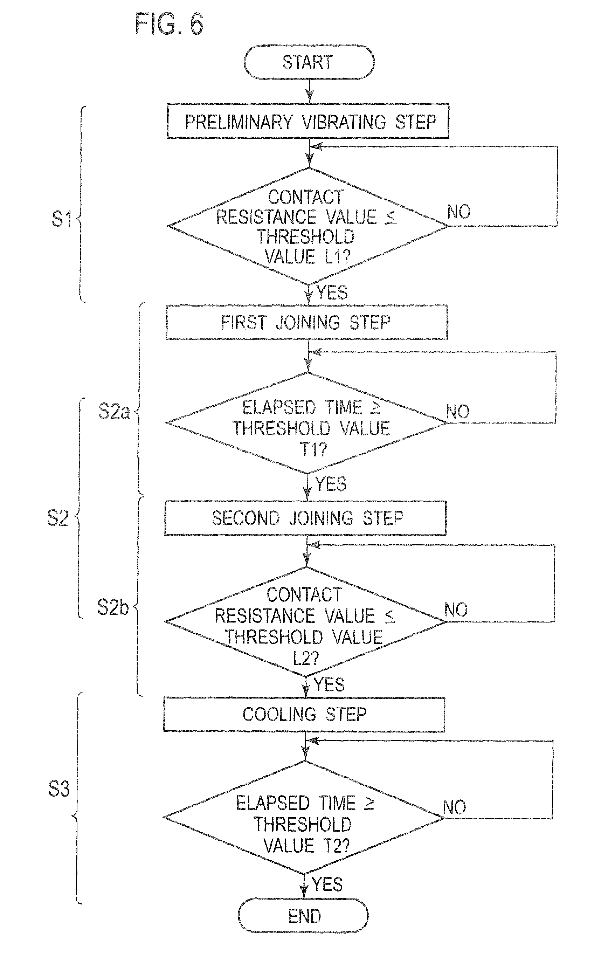

Next, a method for joining conductive members by the joining apparatus 10 according to the first embodiment will be described according to a flowchart of Fig. 6.

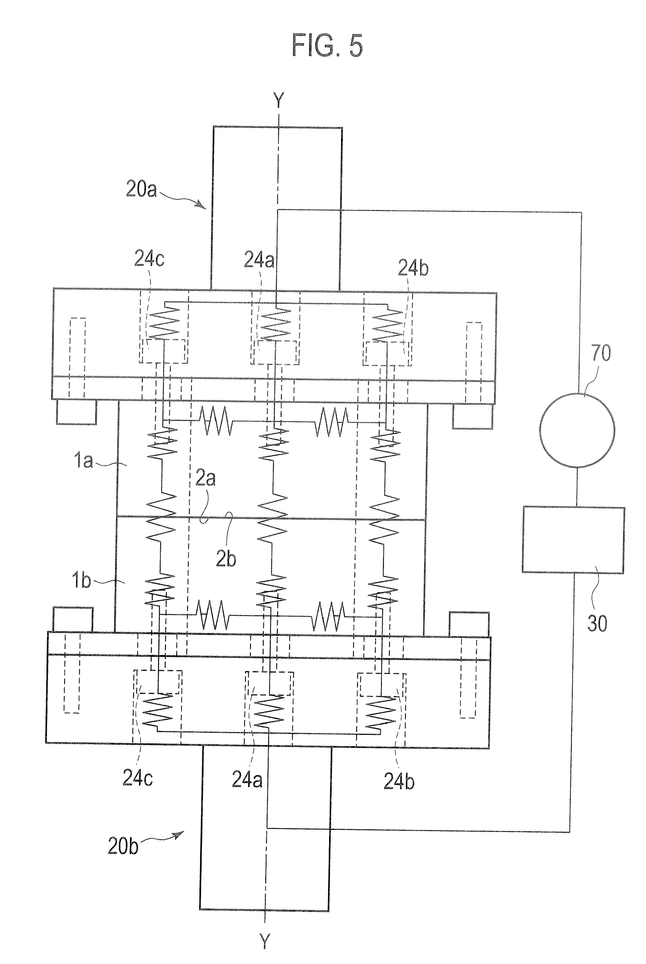

First, the joining members 1a, 1b to be joined to each other are prepared; as illustrated in Fig. 2, the positioning pins 11a, 11b are projected by the positioning member actuator 14, and the joining members 1a, 1b are fixed by the joining member fixing bolts 24 to the electrodes 20a, 20b, respectively, with the electrode plates 23a, 23b (or the current input units) fixed to the electrode bodies 21a, 21b, respectively, by the electrode plate fixing bolts 22. Thereby, the positioning pins 11a, 11b are inserted into the positioning holes 7a, 7b, respectively, of the joining members 1a, I b thereby to effect accurate positioning of the joining members 1a, 1b with respect to the electrodes 20a, 20b, respectively. At this time, the axial fastening forces of the joining member fixing bolts 24 may be adjusted for each bolt. The axial fastening forces of the joining members fixing bolts 24, if large, reduce the contact resistance across the electrodes 20a, 20b and the joining members. 1a, 1b and thus facilitate the flowing of current. In other words, the amount of current passing through each of plural current input paths from the electrode plates 23a, 23b as the current input units to the joining members 1a, 1b can be adjusted by adjusting the axial fastening forces of the joining member fixing bolts 24 for each bolt. Therefore, a path of a current flowing from the electrodes 20a, 20b to the joining members 1a, 1b can be adjusted by varying the axial fastening forces according to the positions of the joining member fixing bolts 24. The joining surfaces 2a, 2b are illustrated in Fig. 5 by way of example as a model as having three current paths for simplicity, and the axial fastening forces of joining member fixing bolts 24b, 24c far away from the central axis Y of the electrodes 20a, 20b may be set higher than those of joining member fixing bolts 24a close to the central axis Y of the electrodes 20a, 20b. A current is more likely to flow through the joining members 1a, 1b along a path closer to the central axis Y of the electrodes 20a, 20b, and therefore, the axial fastening forces of the joining member fixing bolts 24b, 24c far away from the central axis Y of the electrodes 20a, 20b are increased thereby to enable rendering a current flowing into the joining members 1a, 1b as uniform as possible without depending on a distance from the central axis Y of the electrodes 20a, 20b. For joining, it is therefore preferable that the axial fastening forces of the joining member fixing bolts 24 be adjusted so as to make the current value of the joining surfaces 2a, 2b as uniform as possible and pressure applied by the pressing device 40 be kept constant. Thus, the axial fastening forces of the joining member fixing bolts 24 are adjusted thereby to enable varying the path of the current flowing from the electrodes 20a, 20b into the joining members 1a, 1b or enable adjusting the amount of current passing through each of the current input paths, which in turn eliminates the need for provision of plural transformers for purposes of prevention of a shunt current and thus enables achieving a simple configuration of the apparatus and hence cost reductions and space savings.

After the joining members 1a, 1b have been fixed to the electrodes 20a, 20b, respectively, by the joining member fixing bolts 24, the positioning pins 11a, 11b are pulled out of the positioning holes 7a, 7b, respectively, by being withdrawn by the positioning member actuator 14. This enables suppressing heat generation by the positioning pins 11a, 11b or abrasion of the positioning pins 11a, 11b caused by the passage of current through the joining members 1a, 1b or the sliding of the joining members 1a, 1b in a subsequent step. Also, the positioning pins 11a, 11b are made of a material having a higher electrical resistance value than that of the electrodes 20a, 20b and the joining members 1a, 1b thereby to render it difficult for a current to pass through the positioning pins 11a, 11b, thus enabling suppression of the heat generation by the positioning pins 11a, 11b or the abrasion thereof caused by the passage of current therethrough.

Than, the eutectic foil 5 is placed between the joining members 1a, 1b, and the pressing device 40 brings the joining members 1a, 1b into close proximity with each other and presses the joining members 1a, 1b together at a preset pressure with the eutectic foil 5 interposed in between. Preferably, the pressure applied by the pressing device 40 is adjusted to the order of 2 to 10 MPa, for example, by the control device 60; however, the pressure is not so limited.

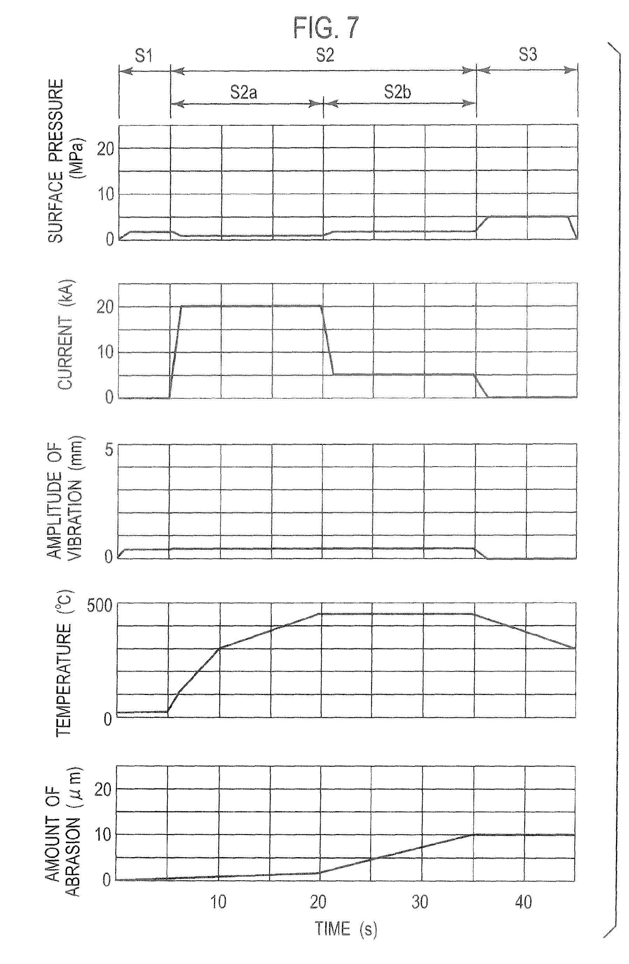

Then, as illustrated in Figs. 6 and 7, the vibrating device 50 is driven by the control device 60 thereby to vibrate the lower joining member 1b with constant amplitude (or a constant vibrating force) in the direction along the joining surfaces 2a, 2b (at a preliminary vibrating step (or a preliminary sliding step) S1). The frequency of vibration and the amplitude of vibration are not particularly limited; however, as an example, it is preferable that the amplitude of vibration be of the order of 100 to 1000 µm, and it is preferable that the frequency of vibration be of the order of 10 to 100 Hz. The direction of vibration of the joining member 1b is such that the joining member 1b makes a reciprocating motion in one direction along the joining surfaces 2a, 2b, thereby to improve the flexibility of the shape of the joining surfaces 2a, 2b. In other words, vibrating is possible, provided only that sliding is possible in one direction, and therefore, the joining surfaces 2a, 2b are not limited to being configured as flat surfaces but may be, for example, in a form such that projecting portions are fitted in grooves extending in one direction. Also, if the joining surfaces 2a, 2b do not have parts to fit each other, vibrating may be such that the joining member 1b makes an orbital motion along the joining surfaces 2a, 2b. As employed herein, the orbital motion means that the joining member 1b vibrates and rotates as it moves in a circular orbit without rotating on its axis. When the joining member 1b is vibrated in such a way as to make the orbital motion, the relative motions of the joining surfaces 2a, 2b do not stop, and therefore, a coefficient of dynamic friction alone becomes active and a coefficient of friction becomes steady, which in turn leads to smooth vibration during vibrating and thus enables uniform abrasion of the joining surfaces 2a, 2b.

When the preliminary vibrating step S1 of vibrating while applying pressure is performed as described above, the joining surfaces 2a, 2b are slid and heated by frictional thereby to soften the material, and thus the joining surfaces 2a, 2b undergo abrasion and plastic flow to render a surface pressure between the joining surfaces 2a, 2b somewhat uniform. Further, the preliminary vibrating step S1 removes an oxide film on the surface of aluminum thereby to reduce variations in contact resistance due to differences in film thickness, thus achieving the effect of suppressing variations in the amount of heat produced by resistance heating at a subsequent step. Therefore, treatment including degreasing the surfaces of the joining members 1a, 1b made of aluminum and, further, removing the oxide films on the surfaces by wire brushing, prior to joining, becomes unnecessary, resulting in an improvement in workability. Incidentally, of course, brushing or other treatment may be carried out before the preliminary vibrating step S1.

In the preliminary vibrating step S1, the control device 60 determines a value of contact resistance across the joining surfaces 2a, 2b from an input signal from the contact resistance detecting device 70, and compares the contact resistance value with a preset threshold value L1, as illustrated in Fig. 6. When the surface pressure between the joining surfaces 2a, 2b becomes uniform, the contact resistance decreases; therefore, when the contact resistance value becomes equal to or less than the threshold value L1, the control device 60 brings the preliminary vibrating step S1 to an end and causes the processing to go to the next joining step S2.

The joining step S2 involves feeding a current to the electrodes 20a, 20b by the current supply device 30 while maintaining vibration by the vibrating device 50, thereby to heat the joining members 1a, 1b by using both vibration heating and resistance heating in combination. In the joining step S2, high surface-pressure sections in which a current concentrates are heated by being subjected significantly to the action of the resistance heating thereby to force the oxide films of the joining surfaces 2a, 2b to peel off, and the applied pressure and vibration also act on the high surface-pressure sections heated by the resistance heating to thus cause abrasion, plastic flow and material diffusion and hence a decrease in the surface pressure of the high surface-pressure sections and thereby vary current concentration locations from moment to moment. Thus, a flow of current is distributed, so that the joining surfaces 2a, 2b are uniformly heated.

The eutectic foil 5 is changed into a liquid phase at a lower melting point than that of the joining members 1a, 1b by eutectic reaction, and thus serves the function of suppressing reoxidation of the joining surfaces by shutting off oxygen. The use of the eutectic foil 5 enables joining with a low heat input in a short time in the air and thus facilitates mass production, as compared to vacuum brazing requiring a vacuum atmosphere and a long time. Incidentally, the provision of the eutectic foil 5 is not necessarily required.

The eutectic foil 5 can vary in film thickness according to part, and thus, the surface pressure between the joining surfaces 2a, 2b can be adjusted. In other words, the surface pressure for joining can be ensured by thickening a part of the eutectic foil 5 corresponding to low surface-pressure sections of the joining surfaces 2a, 2b. Incidentally, a method for adjusting the film thickness of the eutectic foil 5 is not limited to varying the film thickness according to part but may involve using eutectic foil divided into plural portions or stacking eutectic foil in plural layers, for example.

The joining step S2 uses both vibration-induced frictional heating and resistance heating in combination. Thus, even the joining members 1a, 1b having the joining surfaces 2a, 2b having a large area can be heated for joining at a subsequent step, without the need to apply a high pressure to the joining surfaces 2a, 2b. In other words, in the case of, for example, joining by heating using the vibration-induced frictional heating alone, it is necessary to press the materials against each other at high surface pressure in order to gain the amount of frictional heat input; however, the materials become deformed, and therefore, the joining members can be joined only in a limited area and shape. Also, in the case of, for example, joining by heating using the resistance heating alone, the joining takes place with a flow of current concentrating in the high surface-pressure sections and thus results in non-uniformity in joined locations of the joining surfaces, and therefore, the joining surfaces are likewise limited in size and shape. Also, in the case of, for example, joining by heating utilizing high-frequency heating, the joining surfaces can be heated only on their outer periphery, and therefore, the joining surfaces are likewise limited in size and shape.

On the other hand, in the first embodiment, the joining step S2 uses the vibration-induced frictional heating and the resistance heating in combination for heating. Thus, current concentration locations are varied without the need to apply a high pressure to the joining surfaces 2a, 2b, and the joining surfaces 2a, 2b, even if having a large area or a complicated shape, can be heated and finally joined, and moreover, surface joining with a low degree of strain can be achieved.

Also, the joining surfaces 2a, 2b are melted and joined only at their surface layers. Thus, heating time can be reduced, and further, even with a cast article made of a material containing a gas therein, heating is less likely to cause expansion or ejection of the gas in the material, so that good joining can be achieved.

Also, in the case of, for example, joining by frictional heat generation at the joining surfaces by rotation of one of the joining members, the shape of the joining surfaces is limited to a circular shape, whereas, in the joining step S2, vibrating is used to produce frictional heat, and thus, the shape of the joining surfaces 2a, 2b is not limited to the circular shape, and the joining surfaces 2a, 2b may also be provided with the non-contact portions 4a, 4b, respectively. Thus, for example even if the joining surfaces 2a, 2b have a complicated shape having a flow path of fluid therein or have the like shape, the joining surfaces 2a, 2b can be joined by heating while the joining surfaces 2a, 2b are kept airtight throughout their entire area.

Also, even if the extension line from the central axis Y of the electrodes 20a, 20b lies in the non-contact portions 4a, 4b rather than the joining surfaces 2a, 2b, joining can be accomplished by heating with a low heat input in a short time.

Then, the axial fastening forces of the joining member fixing bolts 24a, 24b and 24c are adjusted so as to increase the axial fastening forces of the joining member fixing bolts 24b, 24c far away from the central axis Y of the electrodes 20a, 20b, and thus, the current flowing into the joining members 1a, 1b is made as uniform as possible without depending on the distance from the central axis Y of the electrodes 20a, 20b. Thus, when a contact surface pressure between the joining surfaces 2a, 2b is uniform, the joining surfaces 2a, 2b can be uniformly heated throughout their entire area.

Incidentally, the axial fastening forces of the joining member fixing bolts 24 may also be set so that the current value of the joining surfaces 2a, 2b is smaller at a position closer to the central axis Y of the electrodes 20a, 20b. Doing so facilitates the flowing of current through a region far away from the central axis Y of the electrodes 20a, 20b, and thus, at the beginning of the joining step S2, the region far away from the central axis Y can be heated taking priority over other regions, and after that, a region close to the electrodes 20a, 20b can be heated by increasing applied pressure by the pressing device 40. In other words, the increase of the applied pressure by the pressing device 40 reduces the influence of the axial fastening forces upon current, and thus enables heating the region close, to the electrodes 20a, 20b since a region close to the central axis Y inherently tend to allow the passage of current therethrough.

Also, When the contact surface pressure between the joining surfaces 2a, 2b is not uniform, the axial fastening forces of the joining member fixing bolts 24 in the vicinity of a region where the contact surface pressure is high may be reduced. This renders it difficult for a current to flow through the region where the contact surface pressure is high, urges the current to be shunted to the low surface-pressure sections, and enables performing heating as uniformly as possible. For joining, it is therefore preferable that the axial fastening forces of the joining member fixing bolts 24 be adjusted so as to make the amount of heat produced at the joining surfaces 2a, 2b as uniform as possible.

Also, the axial fastening forces of the joining member fixing bolts 24 may be set so that the amount of heat produced at the joining surfaces 2a, 2b is smaller at a position closer to the high surface-pressure sections. Thereby, at the beginning of the joining step S2, the low surface-pressure sections can be heated taking priority over other sections, and after that, the high surface-pressure sections can be heated by increasing applied pressure by the pressing device 40. In other words, the increase of the applied pressure by the pressing device 40 reduces the influence of the axial fastening forces upon current and facilitates the flowing of current through the high surface-pressure sections in which the axial fastening forces are low, thus enabling the heating of the joining surfaces.

Thus, adjustment of the axial fastening forces and applied pressure enables arbitrarily varying regions to be heated, and hence setting desirable operating conditions as appropriate.

As illustrated in Figs. 6 and 7, the joining step S2 may include increasing the temperature of the joining members 1a, 1b by resistance heating for a predetermined time (i.e. a first joining step S2a), and then, reducing the amount of heat produced by the resistance heating and, also, increasing the amount of heat produced by vibrating (i.e. a second joining step S2b). A method for reducing the amount of heat produced by the resistance heating and also increasing the amount of heat produced by the vibrating can be accomplished merely by increasing pressure applied by the pressing device 40. An increase in the pressure applied by the pressing device 40 leads to an increase in the surface pressure between the joining surfaces 2a, 2b and hence to a decrease in the contact resistance, thus reducing the amount of heat produced by the resistance heating. Further, the increase in the surface pressure between the joining surfaces 2a, 2b leads to an increase in the frictional force between the joining surfaces 2a, 2b, thus increasing the amount of heat produced by the vibrating. Thus, a transition from a process of accelerating the softening of the materials by heating the materials to high temperature by the contact resistance to a process of accelerating the integration of the materials by vibrating the softened materials so as to stir and mix them is effected by reducing the amount of heat produced by the resistance heating and also increasing the amount of heat produced by the vibrating. Incidentally, the method for reducing the amount of heat produced by the resistance heating and also increasing the amount of heat produced by the vibrating is not necessarily limited to the approach of increasing the pressure applied by the pressing device 40 but may be accomplished for example by controlling the current supply device 30 or the vibrating device 50 or may also be accomplished by using the pressing device 40 in combination with other devices.

Incidentally, a transition from the first joining step S2a to the second joining step S2b can be effected by the control device 60; however, as illustrated in Fig. 6, the transition may be made after a lapse of a preset time (e.g. a threshold value T1), or the transition may be made when the measured temperature of the joining members 1a, I b or the like reaches a preset temperature.

In the second joining step S2b, the control device 60 determines contact resistance across the joining surfaces 2a, 2b from an input signal from the contact resistance detecting device 70, and compares the contact resistance with a preset threshold value L2. The contact resistance value decreases as the joining of the joining surfaces 2a, 2b proceeds; therefore, When the contact resistance value becomes equal to or less than the threshold value L2, the control device 60 determines that the joining is completed, brings the joining step S2 to an end, and causes the processing to go to the next cooling step S3.

Incidentally, a method for determining whether the joining is completed may be accomplished by making a decision based on the frictional force between the joining surfaces 2a, 2b detected by the frictional force detecting device 80, rather than by making a decision based on a change in the contact resistance value. The frictional force increases as the joining proceeds; therefore, When the measured frictional force becomes equal to or more than a preset threshold value, a decision is made that the joining is completed, and the joining step S2 is brought to an end. Incidentally, other methods may be used to measure the frictional force.

Although the vibrating device 50 is stopped when bringing the joining step S2 to an end, the vibrating device 50 finally positions the joining members 1a, 1b in specified positions in order to join the joining members 1a, 1b in their desirable relative positions. At this time, the joining members 1a, 1b are positioned with high accuracy with respect to the electrodes 20a, 20b by the positioning pins 11a, 11b, and thus, the joining member 1a and the joining member 1b can be accurately positioned by controlling the vibrating device 50. The vibrating device 50 may include a servo mechanism which performs feedback control on a vibration source (e.g. a servomotor, etc.) based on a displacement signal measured by the displacement detector 51, thereby to achieve more accurate positioning of the relative displacements of the joining member 1a and the joining member 1b. A control means for executing the feedback control may be provided within the vibrating device 50 or may be provided in the control device 60. Incidentally, positioning accuracy decreases when the pressure applied by the pressing device 40 is high, and therefore, the pressure applied by the pressing device 40 may be reduced prior to the stopping of the vibrating device 50. A reduction in the pressure applied by the pressing device 40 leads to an improvement in the positioning accuracy of the joining members 1a, 1b, and thus, the vibrating device 50 can be stopped with the joining members 1a, 1b in their desirable relative positions. Also, other configurations for positioning of the joining members 1a, 1b may be separately provided.

At the cooling step S3, the control device 60 stops the vibrating device 50 and the current supply device 30, and increases the pressure applied by the pressing device 40. As illustrated in Fig. 6, when a preset time (e.g. a threshold value T2) has elapsed, a decision is made that the cooling is finished, and the application of pressure by the pressing device 40 is brought to an end. Alternatively, after an input signal to the control device 60 from a thermometer (unillustrated) which measures the temperature of the joining members 1a, 1b has become equal to or less than a predetermined value, the control devise 60 may determine that the cooling is finished, and bring the application of pressure by the pressing device 40 to an end. Immediately before the cooling step S3 comes to an end, the positioning member actuator 14 causes the positioning pins 11a, 11b to project again and makes an attempt to insert the positioning pins 11a, 11b into the positioning holes 7a, 7b, respectively, of the joining members 1a, 1b. Then, when the positioning pins 11a, 11b can be inserted into the positioning holes 7a, 7b, respectively, it can be seen that the joining members 1a, 1b are joined in their proper positions. Also, when the positioning pins 11a, 11b cannot be inserted into the positioning holes 7a, 7b, respectively, it can be seen that, in the preliminary vibrating step S1 or the joining step S2, misalignment occurs due to insufficiency of forces by which the joining members 1a, 1b are held on the electrodes 20a, 20b, respectively, or the like, or that strain caused by thermal deformation is large. Then, the joining member fixing bolts 24 are removed from the joining members 1a, 1b, and the joining members 1a, 1b joined are removed from the apparatus.

Incidentally, the preliminary vibrating step S1 is not necessarily provided but may be omitted. Also, the softening of the joining surfaces 2a, 2b by resistance heating through the supply of current by the current supply device 30, rather than by sliding movement effected by the vibrating device 50, may be performed in place of the preliminary vibrating step S1 or prior to the preliminary vibrating step S1. Also, the first joining step S2a and the second joining step S2b may be carried out as a single joining step; specifically, the supply of current is reduced between the first joining step S2a and the second joining step S2b, while, on the other hand, applied pressure is not increased therebetween. Also, the cooling step S3 is not necessarily provided but may be omitted.

According to the method for joining conductive members according to the first embodiment, the method involves joining the joining members 1a, 1b together by resistance heating, while vibrating the joining members 1a, 1b relative to each other in the direction X along the joining surfaces, as well as applying pressure in the joining surface direction Z. Thus, the applied pressure and vibration act on high surface-pressure sections heated by the resistance heating thus cause abrasion and plastic flow and hence a decrease in the surface pressure of the high surface-pressure sections and thereby vary current concentration locations from moment to moment. Thereby, the joining surfaces 2a, 2b are uniformly heated to thus enable uniformly joining the joining surfaces 2a, 2b throughout their entire area and also enable achieving surface joining with a low degree of strain. Also, the joining surfaces 2a, 2b are melted and joined only at their surface layers. Thus, heating time can be reduced, and moreover, even with a cast article made of a material containing a gas therein, heating is less likely to cause expansion or ejection of the gas in the material, so that good joining can be achieved.

Also, the Joining members 1a, 1b are provided with the non-contact portions 4a, 4b spaced apart from each other, which are surrounded by the joining surfaces 2a, 2b, respectively. Thus, for example even if the Joining surfaces 2a, 2b have a complicated shape having a flow path of fluid therein or have the like shape, the joining surfaces 2a, 2b can be joined while the joining surfaces 2a, 2b are kept airtight throughout their entire area.

Also, even if the joining surfaces 2a, 2b of the joining members 1a, 1b are located outward of the extension line from the central axis Y of the electrodes 20a, 20b, the joining surfaces 2a, 2b can be joined throughout their entire area to thus enable joining with a low heat input in a short time.

Also, the method includes the preliminary vibrating step S1 of vibrating the joining members 1a, 1b relative to each other in the direction X along the joining surfaces, while applying pressure in the joining surface direction Z without resistance heating, which is performed before the joining step S2. Thus, the joining surfaces 2a, 2b are slid and heated by frictional heat and undergo abrasion and plastic flow thereby to enable rendering the surface pressure between the joining surfaces 2a, 2b uniform.

Also, in the preliminary vibrating step S1, when the contact resistance detected by the contact resistance detecting device 70 becomes equal to or less than the preset threshold value L1, the joining step S2 is started. Thus, the processing can go to the joining step S2 after the contact resistance has become uniform.

Also, the eutectic reaction material (or the intermediate material) is interposed in between the joining members 1a, 1b. Thereby, the eutectic reaction material is changed into a liquid phase at a low melting point by eutectic reaction and thus can suppress reoxidation of the joining surfaces by shutting off oxygen. This enables joining with a low heat input in a short time in the air and thus facilitates mass production.

Also, the eutectic reaction material is formed in the form of film of varying thicknesses according to part, and thus, the surface pressure between the joining surfaces 2a, 2b can be adjusted.

Also, the eutectic reaction material is formed so that the thickness of the eutectic reaction material corresponding to relatively low surface-pressure locations of the joining surfaces 2a, 2b as subjected to applied pressure is relatively larger. Thus, the surface pressure for joining can be ensured.

Also, the joining step S2 includes reducing the amount of heat produced by the resistance heating and also increasing the amount of heat produced by vibrating. (or sliding), with the passage of joining time. Thereby, the acceleration of the softening of the materials by heating the materials to high temperature by the contact resistance can be followed by the acceleration of the integration of the materials by vibrating the softened materials so as to stir and mix them.

Also, in the joining step S2, the applied pressure acting on the joining surfaces 2a, 2b is increased with the passage of joining time. Thereby, a reduction in the amount of heat produced by the resistance heating and an increase in the amount of heat produced by the vibrating can be easily achieved merely by adjusting the pressing device 40.

Also, the contact resistance across the joining surfaces 2a, 2b is adjusted by adjusting the current paths in the joining members 1a, 1b by the joining member fixing bolts 24 (or the current path adjusting means). This eliminates the need for provision of plural transformers for purposes of prevention of a shunt current and thus enables achieving a simple configuration of the apparatus. Also, uniform surface joining can be achieved by adjusting the contact resistance across the joining surfaces 2a, 2b.

Also, the current path adjusting means includes the plural joining member fixing bolts 24 (or fastening units) which fasten the joining members 1a, 1b to the electrodes 20a, 20b, respectively, by axial forces. The contact resistance across the joining surfaces 2a, 2b can be adjusted by individually varying the axial fastening forces, and thus, the contact resistance can be easily adjusted.

Also, the axial fastening forces of the joining member fixing bolts 24 (or the fastening units) are larger at a position farther away from the central axis Y of the electrodes 20a, 20b thereby to enable facilitating the flowing of current through a region far away from the central axis Y. Thus, the current flowing into the joining members 1a, 1b can be made as uniform as possible without depending on the distance from the central axis Y of the electrodes 20a, 20b.

Also, the axial fastening forces of the joining member fixing bolts 24 (or the fastening units) arranged in the vicinity of relatively high surface-pressure locations of the joining surfaces 2a, 2b are smaller than the axial fastening forces of the other joining member fixing bolts 24 thereby to enable rendering it difficult for a current to flow in the vicinity of the relatively high surface-pressure locations. Thus, the current flowing into the joining members 1a, 1b can be made as uniform as possible without depending on the distance from the central axis Y of the electrodes.

Also, the conductive electrode plates 23a, 23b are interposed in between the joining members 1a, 1b and the electrode bodies 21a, 21b, and thus, the contact resistance across the electrode bodies 21a, 21b and the electrode plates 23a, 23b and the contact resistance across the electrode plates 23a, 23b and the joining members are present when a current flows from the electrodes 20a, 20b to the joining members 1a, 1b. Therefore, the configuration having two contact resistances connected in series results, thus increasing the total contact resistance across the electrodes 20a, 20b and the joining members 1a, 1b. This increases the contact resistance sensitivity to the axial fastening forces of the joining member fixing bolts 24 (or the fastening units) to thus expand the range of adjustment of contact resistance.

Also, in the joining step S2, the contact resistance across the joining members 1a, 1b is detected by the contact resistance detecting device 70, and, when the contact resistance becomes equal to or less than the preset threshold value L2, the joining step S2 is stopped. Thereby, the contact resistance value decreases as the joining of the joining surfaces 2a, 2b proceeds, and therefore, the completion of the joining can be easily determined based on the threshold value.

Also, in the joining step S2, a frictional force between the joining members 1a, 1b is detected by the frictional force detecting device 80, and, when the frictional force becomes equal to or more than the preset threshold value, the joining step S2 is stopped. Thereby, the frictional force increases as the joining of the joining surfaces 2a, 2b proceeds, and therefore, the completion of the joining can be easily determined based on the threshold value.

Also, the vibrating of the joining members 1a, 1b is effected by a reciprocating motion. Thereby, the vibrating is possible, provided only that sliding is possible in one direction, and therefore, it is not required that the joining surfaces 2a, 2b be configured as flat surfaces, thus improving the flexibility of the shape of the joining surfaces 2a, 2b.

Also, the vibrating of the joining members 1a, 1b is effected by an orbital motion. Thereby, the relative motions of the joining surfaces 2a, 2b do not stop, and therefore, the coefficient of dynamic friction alone becomes active and the coefficient of friction becomes steady, which in turn leads to smooth vibration during vibrating and thus enables uniform abrasion of the joining surfaces 2a, 2b.

Also, the total amount of heat input to the joining surfaces 2a, 2b, produced by the resistance heating, is larger than the total amount of heat input to the joining surfaces 2a, 2b, produced by frictional heating produced by the vibrating. Thereby, pressure required for vibration-induced heating can be reduced, and the joining surfaces 2a, 2b of the joining members 1a, 1b, even if having a large area or a complicated shape, can be joined. Also, the vibrating force of the vibrating device 50 and the pressure of the pressing device 40 can be low, and therefore, the pressing device 40 and the vibrating device 50 can be small in size to thus achieve a simple and space-saving configuration of the joining apparatus 10.

According to the joining apparatus 10 for conductive members according to the first embodiment, the joining apparatus 10 includes the control devices 60 for controlling the current supply device 30 and the vibrating device 50 so as to perform vibration and resistance heating by supplying a current to the electrodes 20a, 20b while vibrating the pair of joining members 1a, 1b. Thus, pressure and vibration act on high surface-pressure sections of the joining members 1a, 1b heated by the resistance heating to thus cause abrasion and plastic flow and hence a decrease in the surface pressure of the high surface-pressure sections and thereby vary current concentration locations from moment to moment. Thereby, the joining surfaces 2a, 2b are uniformly heated to thus enable uniformly joining the joining surfaces 2a, 2b throughout their entire area and also enable achieving surface joining with a low degree of strain.

Also, before the vibration and resistance heating, the control device 60 controls the current supply device 30 and the vibrating device 50 so as to perform the preliminary vibrating without subjecting the joining members 1a, 1b to the resistance heating. Thugs, the joining surfaces 2a, 2b are heated by frictional heat and undergo abrasion and plastic flow thereby to enable rendering the surface pressure between the joining surfaces 2a, 2b uniform.

Also, in the preliminary vibrating, when the contact resistance detected by the contact resistance detecting device 70 becomes equal to or less than the preset threshold value L1, the control device 60 starts the vibration and resistance heating. Thereby, the processing can go to the joining step S2 after the contact resistance has become uniform.

Also, in the vibration and resistance heating, the control device 60 increases the pressure of the pressing devices 40 with the passage of joining time. Thereby, a reduction in the amount of heat produced by the resistance heating and an increase in the amount of heat produced by the vibrating can be easily achieved merely by adjusting the pressing device 40.

Also, the joining apparatus 10 includes the joining member fixing bolts 24 (or the current path adjusting means) for varying the current paths in the joining members 1a, 1b. This eliminates the need for provision of plural transformers for purposes of prevention of a shunt current and thus enables achieving a simple configuration of the apparatus. Also, uniform surface joining can be achieved by adjusting the contact resistance across the joining surfaces 2a, 2b.

Also, the current path adjusting means includes two or more joining member fixing bolts 24 (or fastening units) which fasten the joining members 1a, 1b to the electrodes 20a, 20b, respectively, by axial forces. Thereby, the contact resistance across the joining surfaces 2a, 2b can be adjusted by individually varying the axial fastening forces, and thus, the contact resistance can be easily adjusted.

Also, in the vibration and resistance heating, when the contact resistance detected by the contact resistance detecting device 70 becomes equal to or less than the preset threshold value L2, the control device 60 stops the vibration and resistance heating. Thereby, the contact resistance value decreases as the joining of the joining surfaces 2a, 2b proceeds, and therefore, the completion of the joining can be easily determined based on the threshold value.

Also, in the vibration and resistance heating, when the frictional force detected by the frictional force detecting device 80 becomes equal to or more than the preset threshold value, the control devices 60 stops the vibration and resistance heating. Thereby, the frictional force increases as the joining of the joining surfaces 2a, 2b proceeds, and therefore, the completion of the Joining can be easily determined based on the threshold value.

Also, the vibrating by the vibrating device 50 is a reciprocating motion. Thereby, the vibrating is possible, provided only that sliding is possible in one direction, and therefore, it is not required that the joining surfaces 2a, 2b be configured as flat surfaces, thus improving the flexibility of the shape of the joining surfaces 2a, 2b.

Also, the vibrating by the vibrating device 50 is an orbital motion. Thereby, the relative motions of the joining surfaces 2a, 2b do not stop, and therefore, the coefficient of dynamic friction alone becomes active and the coefficient of friction becomes steady, which in turn leads to smooth vibration during vibrating and thus enables uniform abrasion of the joining surfaces 2a, 2b.

Also, the control device 60 controls at least one of the current supply device 30, the vibrating device 50 and the pressing device 40 so that the total amount of heat input to the joining members 1a, 1b, produced by the resistance heating, is larger than the total amount of heat input to the joining members 1a, 1b, produced by frictional heating produced by the vibrating. Thereby, pressure required for vibration-induced heating can be reduced, and the joining surfaces 2a, 2b of the joining members 1a, 1b, even if having a large area or a complicated shape, can be joined. Also, the vibrating force of the vibrating device 50 and the pressure of the pressing device 40 can be low, and therefore, the pressing device 40 and the vibrating device 50 can be small in size to thus achieve a simple and space-saving configuration of the joining apparatus 10.

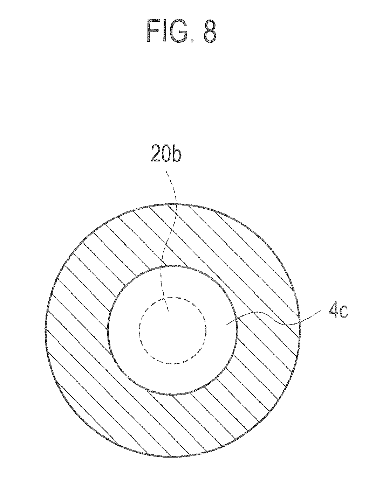

Incidentally, the shape of the joining member is not limited, provided that the joining members can be vibrated with the joining surfaces in contact. For example, Figs. 8 to 10 illustrate the cross sections of joining members as other examples in the vicinity of their joining surfaces, and a non-contact portion 4c may be formed in a circular cross section, as illustrated in Fig. 8. Incidentally, reference numeral 20b denotes the electrode.

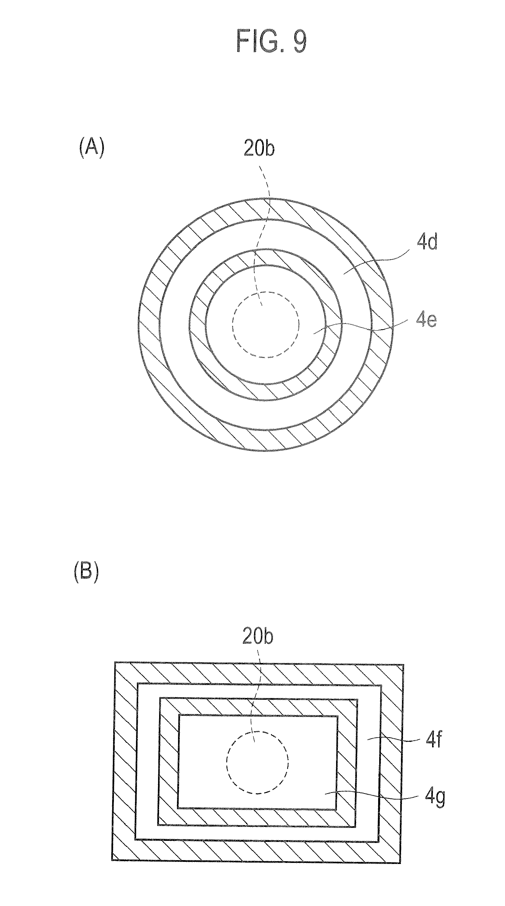

Also, non-contact portions 4d, 4e may be in the form of double tube of circular cross section as illustrated in Fig. 9(A), or non-contact portions 4f, 4g may be in the form of double tube of rectangular cross section as illustrated in Fig. 9(B). Also, a tube structure may be of triple or more tubes, and the cross-sectional configuration may be of shapes other than rectangular and circular shapes.

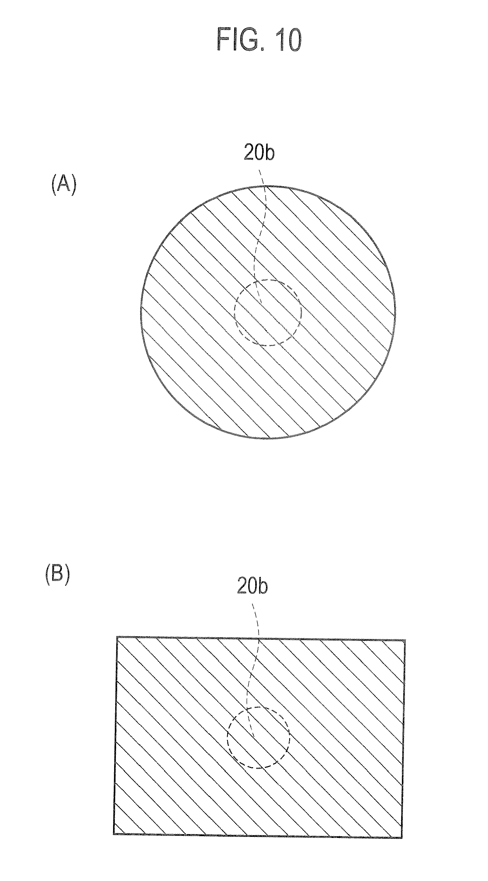

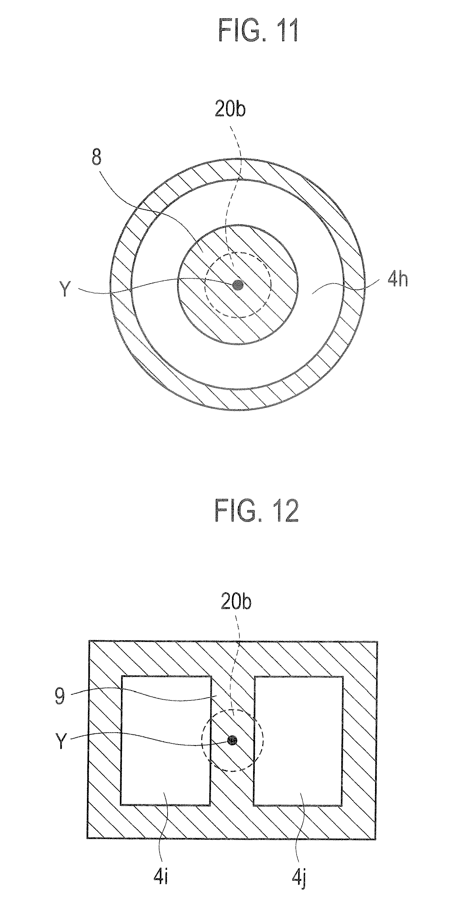

Also, as illustrated in Figs. 10(A) and 10(B), it is not necessarily required that the non-contact portion be formed, and the cross-sectional configuration may be of rectangular, circular or other shapes. Also, as illustrated in Fig. 11, a non-contact portion 4h may be formed in a tube body in such a manner that a solid core 8 located on the extension line from the central axis Y of the electrode is provided. Also, as illustrated in Fig. 12, the configuration may be such that two non-contact portions 4i, 4j are arranged side by side and a wall 9 between the two non-contact portions 4i, 4j is formed on the extension line from the central axis Y of the electrode. Incidentally, in a form illustrated in Fig. 12, three or more non-contact portions may be arranged side by side, and the well 9 is not limited to being present on the extension line from the central axis Y of the electrode.

Incidentally, the axial portions 26a, 26b and the fixing portions 27a, 27b may be separately configured.

### [Second Embodiment]

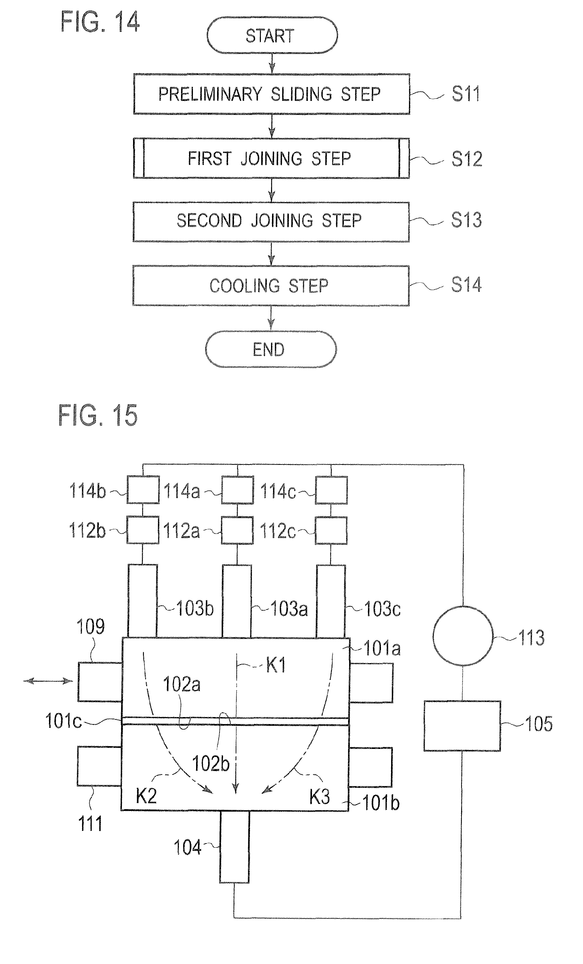

As illustrated in Fig. 15, a joining apparatus 100 according to a second embodiment of the present invention is different line from the joining apparatus 10 according to the first embodiment in that plural first electrodes 103a, 103b, 103c (or current input units) are provided for a joining member 101a and the amount of current of each electrode for the joining member 101a can be controlled.

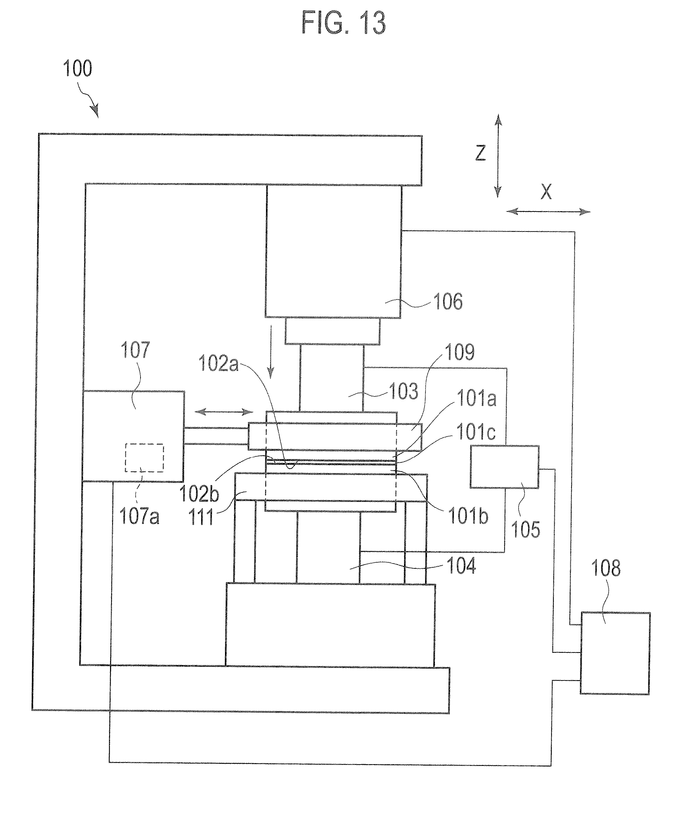

As illustrated in Fig. 13, the joining apparatus 100 includes a pair of a first electrode 103 and a second electrode 104 which contact a pair of the joining members 101a, 101b, respectively (hereinafter, the first electrode and the second electrode will be sometimes called merely the electrodes), a current supply device 105 (or a current supply means) for supplying a current to the electrodes 103, 104, and a pressing device 106 (or a pressing means) for pressing the electrodes 103; 104 against the joining members 101a, 101b in the joining surface direction Z thereof (i.e. the direction orthogonal to the joining surfaces). Further, the joining apparatus 100 includes a vibrating device 107 (or a sliding means) for sliding the joining member 101a, and a control device 108 (or a control means) for controlling the devices 105, 106, 107. At least one of the electrodes 103, 104 (e.g. the electrode 103 in the second embodiment) is provided in the form of plural divided electrodes.

Although the joining members 101a, 101b are made of aluminum (Al), the joining members 101a, 101b are applicable without any particular limitation, provided that they are made of conductive material. Also, the joining members 101a, 101b are applicable for joining of different materials, section as aluminum (Al) and iron (Fe), and aluminum (Al) and magnesium (Mg).

A eutectic material 101c in the form of foil made of a eutectic reaction material which undergoes eutectic reaction with the joining members 101a, 101b is sandwiched in between the pair of joining members 101a, 101b. Preferably, the eutectic material 101c is formed in coincidence with the shape of joining surfaces 102a, 102b. When the joining members 101a, 101b are made of aluminum, zinc (Zn), silicon (Si), copper (Cu), tin (Sn), silver (Ag), nickel (Ni) or the like which undergoes eutectic reaction with the aluminum is available for the eutectic material 101c. Incidentally, any material may be used in place of the eutectic material 101c, provided that the material is changed into a liquid phase at a lower temperature than the melting point of at least one of the joining members 101a, 101b. Preferably, the eutectic material 101c has a thickness of 10 to 100 µm, for example; however, the thickness is not so limited but may also be uniform or vary according to part.

The pressing device 106 is a device for pressing the pair of joining members 101a, 101b in the joining surface direction Z through the electrodes 103, 104, and has a hydraulic cylinder or the like, for example, built-in. The pressing device 106 is connected to the control device 108 and configured to be capable of arbitrarily controlling applied pressure.

The vibrating device 107 is a device for sliding the one joining member 101a in the direction X along the joining surfaces 102a, 102b (i.e. the direction orthogonal to the normal to the joining surfaces). The joining apparatus 100 includes a holder 109 (or a holding member) for holding the upper joining member 101a movably along the direction X, and a fixing unit 111 (or a holding member) for fixing the lower joining member 101b, and the vibrating device 107 effects sliding of the joining member 101a through the holder 109. The holder 109 and the fixing unit 111 function as positioning members for accurate positioning of the relative positions of the joining member 101a and the joining member 101b. The vibrating device 107 includes a displacement detector 107a for detecting a displacement of the joining member 10a being slid. The displacement detector 107a is a displacement sensor, or an encoder for displacement detection, for example.

Although ultrasonic vibration, electromagnetic vibration, hydraulic vibration, cam-actuated vibration, or the like, for example, is applicable for a mechanism of the vibrating device 107, the mechanism is not so limited, provided that vibrating is possible. The vibrating device 107 is connected to the control device 108 and configured to be capable of arbitrarily controlling a frequency of vibration, amplitude of vibration, a vibrating force, and the like.

The current supply device 105 is a device capable of feeding a DC current or an AC current to the electrodes 103, 104, and is connected to the control device 108 and configured to be capable of arbitrarily controlling a current value and a voltage value.

The control device 108 is an electronic computer which performs centralized control on the pressing device 106, the vibrating device 107 and the current supply device 105. The control device 108 includes a processing unit, a storage unit, an input unit, and an output unit. A program to control the overall joining apparatus 100 is stored in the storage unit, and the program is executed by the processing unit thereby to cause the joining apparatus 100 to perform joining of the joining members 101a, 101b.

Incidentally, the devices may be manually actuated without the provision of the control device 108.

Also, the electrodes 103, 104 are not necessarily limited to coming in direct contact with the joining members 101a, 101b but may contact them for example with other conductive members in between.

Also, the provision of the eutectic material 101c is not necessarily required. Also, general brazing material or solder may be used in place of the eutectic material 101c.

Also, although the pressing device 106 is illustrated in Fig. 13 as provided on the first electrode 103 side, the pressing device 106 may be provided on the second electrode 104 side or may be provided on both sides. Also, although the pressing device 106 presses the joining members 101a, 101b with the electrodes 103, 104 in between, the pressing device 106 may be configured to directly press the joining members 101a, 101b without the electrodes 103, 104 being interposed in between. In this case, other pressing devices for pressing the joining members 101a, 101b in themselves are provided in addition to the pressing device 106 for pressing the electrodes 103, 104.

Also, the vibrating device 107 may be configured to vibrate the joining member 101b rather than the joining member 101a or may be configured to vibrate both the joining members 101a, 101b.

Next, a method for joining the joining members 101a, 101b by using the joining apparatus 100 will be described according to a flowchart of Fig. 14.

First, as illustrated in Fig. 13, the eutectic material 101c is sandwiched in between the joining members 101a, 101b to be joined to each other, and the joining members 101a, 101b are held between the electrodes 103, 104. The joining member 101b is fixed to the fixing unit 111, and the joining member 101a is held to the holder 109 in such a way as to be capable of vibrating.

Then, the pressing device 106 presses the joining members 101a, 101b together at a preset pressure. Preferably, the pressure applied by the pressing device 106 is adjusted to the order of 2 to 10 MPa, for example, by the control device 108; however, the pressure is not so limited.

Then, the vibrating device 107 is driven by the control device 108 thereby to vibrate and and the joining member 101a in the direction along the joining surfaces 102a, 102b (at a preliminary sliding step S11). The frequency of vibration and the amplitude of vibration are not particularly limited; however, as an example, it is preferable that the amplitude of vibration be of the order of 100 to 1000 µm, and it is preferable that the frequency of vibration be of the order of 10 to 100 Hz.

When the preliminary sliding step S11 of effecting sliding while applying pressure is performed as described above, the joining surfaces 102a, 102b are slid and heated by frictional heat generation thereby to soften the material, and thus the joining surfaces 102a, 102b undergo plastic flow while undergoing abrasion, thereby to render a surface pressure between the joining surfaces 102a, 102b somewhat uniform. Further, the preliminary sliding step S11 removes an oxide film on the surface of aluminum thereby to reduce variations in contact resistance due to differences in film thickness, thus achieving the effect of suppressing variations in the amount of heat produced by resistance heating at a subsequent step. Therefore, treatment including degreasing the surfaces of the joining members 1a, 1b made of aluminum and, further, removing the oxide films on the surfaces by wire brushing, prior to joining, becomes unnecessary, resulting in an improvement in workability. Incidentally, of course, brushing or other treatment may be carried out before the preliminary sliding step S11.

After the preliminary sliding step S11, a first joining step S12 is performed. At the first joining step S12, the first electrode 103 and the second electrode 104 are brought into contact with cause the joining members 101a, 101b, respectively, and a current is supplied between the first electrode 103 and the second electrode 104 by the current supply device 105, while the sliding by the vibrating device 107 is maintained. In this manner, the joining members 101a, 101b are heated by using both frictional heating and resistance heating in combination. In the first joining step S12, high surface-pressure sections of the joining surfaces 102a, 102b in which a current concentrates are heated by being subjected significantly to the action of the resistance heating, thereby to force the oxide films of the joining surfaces 102a, 102b to peel off. Further, the applied pressure and the sliding act on the high surface-pressure sections heated by the resistance heating to thus cause plastic flow and material diffusion and also abrasion of the high surface-pressure sections and thereby vary current concentration locations from moment to moment. Thus, a flow of current is distributed, so that the joining surfaces 102a, 102b are uniformly heated.

After the first joining step S12, a second joining step S13 is performed. At the second joining step S13, while the supply of current by the current supply device 105 is reduced, frictional heat is increased by increasing pressure applied by the pressing device 106. This reduces the amount of heat produced by the resistance heating, and thus effects a transition to the process of accelerating the integration of the materials by sliding the softened materials so as to stir and mix them. Incidentally, the supply of current by the current supply device 105 is finally stopped. Also, an increase in the frictional heat may be achieved by controlling the vibrating device 107.

Although the vibrating device 107 is stopped immediately before bringing the second joining step S13 to an end, the vibrating device 107 finally positions the joining members 101a, 101b in desirable positions in order to join the joining members 101a, 101b in their desirable relative positions. At this time, the joining members 101a, 101b are held by the holder 109 and the fixing unit 111 as the positioning members, and thus, the joining member 101a and the joining member 101b can be accurately positioned by controlling the vibrating device 107. The vibrating device 107 may include a servo mechanism which performs feedback control on a vibration source (e.g. a servomotor, etc.) based on a displacement signal measured by the displacement detector 107a, thereby to achieve more accurate positioning of the relative displacements of the joining member 101a and the joining member 101b. A control means) for executing the feedback control may be provided within the vibrating device 107 or may be provided in the control device 108. Incidentally, positioning accuracy decreases when the pressure applied by the pressing device 106 is high, and therefore, the pressure applied by the pressing devise 106 may be reduced prior to the stopping of the vibrating device 107. A reduction in the pressure applied by the pressing device 106 leads to an improvement in the positioning accuracy of the joining members 101a, 101b, and thus, the vibrating device 107 can be stopped with the joining members 101a, 101b in their desirable relative positions. Incidentally, other configurations for positioning of the joining members 101a, 101b may be separately provided.

After the second joining step S13, a cooling step S14 is performed. At the cooling step S14, the control device 108 stops the vibrating device 107 and the current supply device 105, and increases the pressure applied by the pressing device 106. Then, when a preset time has elapsed, a decision is made that the cooling is finished, and the application of pressure by the pressing device 106 is brought to an end. Alternatively, after an input signal to the control device 108 from a thermometer (unillustrated) which measures the temperature of the joining members 101a, 101b has become equal to or less than a predetermined value, the control device 108 may determine that the cooling is finished, and bringing the application of pressure by the pressing device 106 to an end. Then, the electrodes 103, 104 are withdrawn, and the joining members 101a, 101b joined are removed from the apparatus. Thereby, the joining of the joining members 101a, 101b is completed.

A diffusion joined surface joined by diffusion of the material of the joining members 101a, 101b, a plastic flow joined surface joined by plastic flow of the material of the joining members 101a, 101b, and an interlayer-interposed joined surface joined with the eutectic material 101c interposed in between are mixed and formed on a joined interfacial surface of the joining members 101a, 101b joined by the joining method of the second embodiment.

In the first joining step S12 and the second joining step S13, the eutectic material 101c is changed into a liquid phase at a low melting point by eutectic reaction thereby to accelerate interdiffusion of the joining members 101a, 101b or interdiffusion of the eutectic material 101c into the joining members 101a, 101b. Further, the eutectic material 101c serves the function of suppressing reoxidation of the joining surfaces 102a, 102b by shutting off oxygen, and, therefore, enables joining with a low heat input in a short time in the air and thus facilitates mass production,

The joining method of the second embodiment uses the sliding and the resistance heating in combination for joining. Without the need to apply a high pressure to the joining surfaces 102a, 102b, therefore, current concentration locations are varied and uniform heating becomes possible, and the joining surfaces 102a, 102b, even if having a large area or a complicated shape, can be joined, and moreover, uniform surface joining with a low degree of strain can be achieved. Also, the joining surfaces 102a, 102b are melted and joined only at their surface layers. Thus, heating time can be reduced, and further, even with a cast article made of a material containing a gas therein, heating is less likely to cause expansion or ejection of the gas in the material, so that good joining can be achieved.

Incidentally, although the joining member 101a is vibrated in one direction along the joining surfaces 102a, 102b, the vibrating of the joining member 101a is not so limited, provided that the joining member 101a makes relative sliding movement. The joining member 101a may be vibrated in two directions along the joining surfaces 102a, 102b, for example like an orbital motion or the like.

Also, the preliminary sliding step S11 is not necessarily provided but may be omitted. Also, the softening of the joining surfaces 102a, 102b by resistance heating through the supply of current to the electrodes 103, 104 by the current supply device 105, rather than by sliding movement effected by the vibrating device 107, may be performed in place of the preliminary sliding step S11 or prior to the preliminary sliding step S11. Also, the first joining step S12 and the second joining step S13 may be carried out as a single joining step; specifically, the supply of current is reduced between the first joining step S12 and the second joining step S13, while, on the other hand, applied pressure is not increased therebetween. Also, the cooling step S14 is not necessarily provided but may be omitted.

Next, a specific configuration of the joining apparatus 100 according to the second embodiment will be described. As illustrated in Fig. 15, the joining apparatus 100 includes the plural (three, as an example in the second embodiment) first electrodes 103a, 103b, 103c as the first electrode 103 for supplying a current to the joining member 101a to be slid. Incidentally, there is only one second electrode 104 for supplying a current to the joining member 101b. The first electrodes 103a, 103b, 103c for supplying a current to the joining member 101a outnumber the second electrode 104 for supplying a current to the joining member 101b, and the total area of contact of the first electrode 103 with the joining members 101a is larger than the total area of contact of the second electrode 104 with the joining member 101b. Thus, the current density of the first electrodes 103a, 103b, 103c is lower than that of the second electrode 104. Therefore, the sliding of the joining member 101a can reduce abrasion or fusion of the first electrodes 103a, 103b, 103c and the joining member 101a during the sliding of the first electrodes 103a, 103b, 103c and the joining member 101a, as compared to the sliding of the joining member 101b.

Then, a first current adjusting unit 112a, a second current adjusting unit 112b and a third current adjusting unit 112c controlled by the control device 108 are connected to the first electrodes 103a, 103b, 103c, respectively (hereinafter, the first current adjusting unit, the second current adjusting unit and the third current adjusting unit will be called merely the current adjusting units). Then, the control device 108 controls the current adjusting units 112a, 112b, 112c thereby to enable controlling the amount of current supplied to the first electrodes 103a, 103b, 103c, respectively. Although variable-voltage transformers, for example, are used as the current adjusting units 112a, 112b, 112c, variable resistors may be used.

Also, a path through which a current flows from the current supply device 105 to the first electrodes 103a, 103b, 103c is provided with a volt meter 113 capable of measuring the voltage of the current supply device 105, and is further provided with a first ammeter 114a, a second ammeter 114b and a third ammeter 114c capable of measuring the amount of current flowing to the first electrodes 103a, 103b, 103c, respectively (hereinafter, the first ammeter, the second ammeter and the third ammeter will be sometimes called merely the ammeters).

Then, measurement signals from the volt meter 113 and the ammeters 114a, 114b, 114c are all inputted to the control device 108. Therefore, the control device 108 can calculate a value of contact resistance across the joining surfaces 102a, 102b in three current paths K1, K3 from the first electrodes 103a, 103b, 103c to the second electrode 104, from measured results obtained by the volt meter 113 and the ammeters 114a, 114b, 114c and the amount of adjustment of the current adjusting units 112a, 112b, 112c.

Specifically, in the case of, for example, the current path K1 from the first electrode 103a to the second electrode 104, a voltage in the first current path K1 can be calculated from a voltage measured by the volt meter 113 and a voltage of the first current adjusting unit 112a, and a total resistance value in the first current path K1 can be calculated by dividing the calculated value by a current value detected by the first ammeter 114a. The total resistance value includes the value of contact resistance across the joining surfaces 102a, 102b, the resistance value of the joining members 101a, 101b in themselves, the value of contact resistance across the first electrode 103a and the joining member 101a, and the value of contact resistance across the second electrode 104 and the joining member 101b, and the ratio of the value of contact resistance across the joining surfaces 102a, 102b to the total resistance value varies according to pressure or the like. Therefore, for example, a reference table may be prepared beforehand by experiment, analysis or the like thereby to calculate the value of contact resistance across the joining surfaces 102a, 102b from the calculated total resistance value according to measured conditions,

In the same manner, the values of contact resistance across the joining surfaces 102a, 102b in the second and third current paths K2, K3 can be calculated from a voltage measured by the volt meter 113 and voltages of the second and third current adjusting units 112b, 112c, and current values detected by the second and third ammeters 114b, 114c. Thus, the volt meter 113, the ammeters 114a, 114b, 114c, the current adjusting units 112 and the control device 108 function as a contact resistance detector to calculate the value of contact resistance across the joining surfaces 102a, 102b. Incidentally, the contact resistance detector is not limited to the above-described configuration but may be designed as appropriate, provided that the contact resistance detector can detect the value of contact resistance across the joining surfaces 102a, 102b of the joining members 101a, 101b.

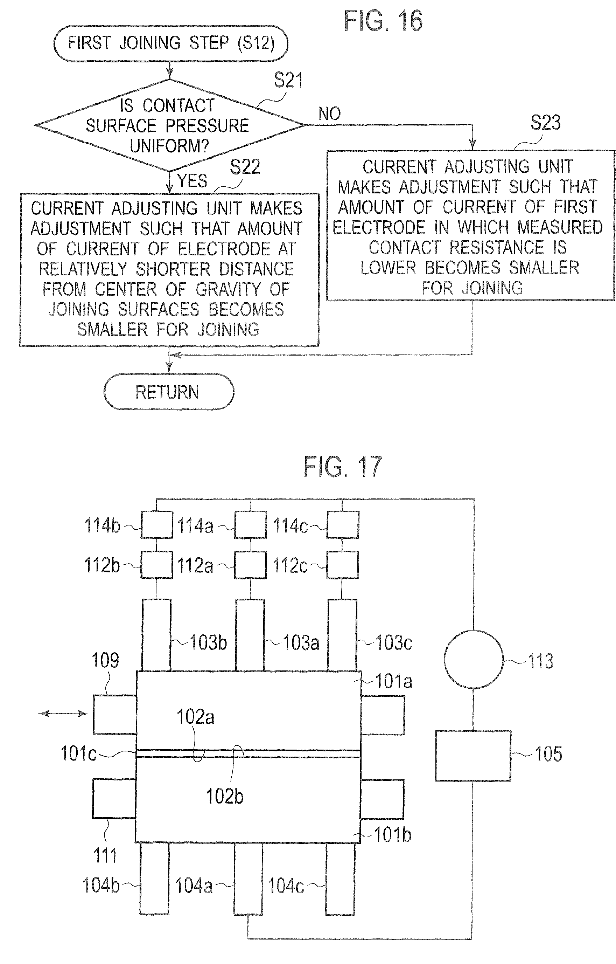

Then, in the first joining step S12, as illustrated in Fig. 16, uniformity in contact surface pressure between the joining surfaces 102a, 102b is determined from the contact resistance value detected by the contact resistance detector (at step S21). A decision may be made in the following manner: for example, when a difference between the detected values of contact resistance across the joining surfaces 102a, 102b in the current paths K1, K2, K3 falls within a preset threshold range, the control device 108 determines that the contact surface pressure is uniform; on the other hand, when the difference falls outside the threshold range, the control device 108 determines that the contact surface pressure is not uniform. Incidentally, the threshold value may be set based on experiment, analysis, or the like.

When a decision is made that the contact surface pressure between the joining surfaces 102a, 102b is the adjusting units 112a, 112b, 112c are controlled so that the amount of current of the electrode at a relatively shorter distance from the center of gravity of the joining surfaces 102a, 102b becomes smaller (at step S22). In the second embodiment, the first electrode 103a is closer to the center of gravity of the joining surfaces 102a, 102b than the first electrodes 103b, 103c, and therefore, the control device 108 controls at least one of the current adjusting units 112a, 112b, 112c so that the current value of the first electrode 103a is smaller than the current values of the other first electrodes 103b, 103c. This reduces the amount of current in the vicinity of the center of gravity of the joining surfaces 102a, 102b in which currents from plural electrodes are likely to superimpose themselves on each other, and thus enables rendering more uniform the amount of current passing through the joining surfaces 102a, 102b. Incidentally, the amount of adjustment of the current adjusting units 112a, 112b, 112c may be set based on experiment, analysis, or the like.

When a decision is made that the contact surface pressure between the joining surfaces 102a, 102b is not uniform, at least one of the current adjusting units 112a, 112b, 112c is controlled so that the amount of current of the first electrode 103 in the vicinity of higher contact-surface-pressure sections, or equivalently, the first electrode 103 in which the contact surfaces pressure between the joining surfaces 102a, 102b is detected as being higher, is smaller than the amount of current of the other first electrode 103 (at step S23). This reduces the amount of current passing through high surface-pressure sections in which current concentration occurs, and thus enables rendering more uniform the amount of current passing through the joining surfaces 102a, 102b. Incidentally, the amount of adjustment of the current adjusting units 112a, 112b, 112c may be set based on experiment, analysis, or the like.

When the first joining step S12 is finished, the processing returns to the second joining step S13 illustrated in Fig. 14.

Incidentally, a configuration provided with the contact resistance detector is not necessarily required for determination of the uniformity in contact surface pressure between the joining members 101a, 101b. Therefore, when before joining it can be seen that the contact surface pressure between the joining members 101a, 101b is uniform, or when before joining it can be seen that the contact surface pressure is not uniform and high contact-surface-pressure sections are found, the processing may be performed in the following manner: without the contact resistance detector determining the uniformity in contact surface pressure, the decision step S21 illustrated in Fig. 16 is omitted, and step S22 or S23 of joining by adjusting the current adjusting units 112a, 112b, 112c is performed.

According to the second embodiment, plural current input paths (i.e. the first electrodes 103a, 103b, 103c) to the joining member 101a are provided, and, when a current is passed through the joining members 101a, 101b, the control device 108 can control a current input value of at least one of the current input paths (e.g. the three first electrodes 103a, 103b, 103c in the second embodiment). Thus, the amount of heat produced on the joining surfaces 102a, 102b can be controlled.

Also, the plural first electrodes 103a, 103b, 103c of the same polarity for supplying a current to the joining member 101a are provided, and the current input values of the current input paths are controlled by adjusting the amount of current of the first electrodes 103a, 103b, 103c. Thus, the amount of heat produced on the joining surfaces 102a, 102b can be controlled merely by adjusting the amount of current.

Also, in the second embodiment, the amount of current of the electrode (e.g. the first electrode 103a), of the plural first electrodes 103a, 103b, 103c of the same polarity, at a relatively shorter distance from the center of gravity of the joining surfaces 102a, 102b can be controlled so as to become relatively smaller than the amount of current of the other electrodes (e.g. the first electrodes 103b, 103c) (see step S22 of Fig. 16). Therefore, when a decision can be made that the contact surface pressure between the joining surfaces 102a, 102b is uniform, the amount of current in the center of the joining surfaces 102a, 102b in which currents superimpose themselves on each other is reduced to thus enable rendering more uniform the amount of current passing through the joining surfaces 102a, 102b.

Also, in the second embodiment, the amount of current of the electrode 103 , of the plural first electrodes 103a, 103b, 103c of the same polarity, at a relatively shorter distance from relatively high contact-surface-pressure sections of the joining surfaces 102a, 102b can be controlled so as to become relatively smaller than the amount of current of the other electrodes 103 (see step S23 of Fig. 16). Therefore, when a decision can be made that the contact surface pressure between the joining surfaces 102a, 102b is not uniform, the amount of current passing through high surface-pressure sections in which current concentration occurs is reduced to thus enable rendering more uniform the amount of current passing through the joining surfaces 102a, 102b.

Also, the contact surface pressure between the joining surfaces 102a, 102b is detected, and the amount of current of the first electrodes 103a, 103b, 103c can be controlled based on the detected contact surface pressure. Thus, desirable joining conditions for each of the joining members 101a, 101b can be automatically determined for joining.

Also, the first electrodes 103a, 103b, 103c for supplying a current to the joining member 101a outnumber the second electrode 104 for supplying a current to the joining member 101b, and thus have a larger total area of contact and a lower current density. Therefore, the electrode which contacts the joining member 101a to be slid has the lower current density, thus enabling a reduction in abrasion or fusion of the first electrodes 103a, 103b, 103c during the sliding of the first electrodes 103a, 103b, 103c and the joining member 101a.

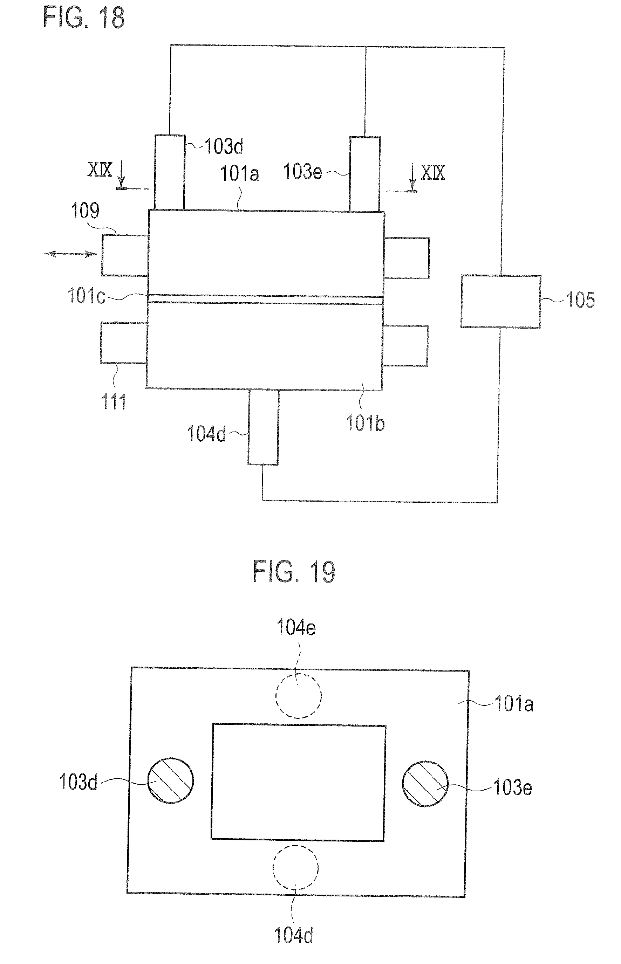

Incidentally, Fig. 17 illustrates a modification of the joining apparatus of the second embodiment; the joining apparatus may include plural (three, as an example in the embodiment) second electrodes 104a, 104b, 104c as the second electrode 104 for supplying a current to the joining member 101b. Alternatively, the second electrodes 104 which contact the joining member 101b may outnumber the first electrodes 103 which contact the joining member 101a. Also, first electrodes 103d, 103e which contact the joining member 101a and second electrodes 104d, 104e which contact the joining member 101b may be configured so as not to coincide with each other in the joining surface direction Z, as is the case with another modification of the joining apparatus of the second embodiment illustrated in Figs. 18 and 19. Thereby, the amount of current flowing between the first electrodes 103d, 103e and the second electrodes 104d, 104e is distributed to thus enable rendering more uniform the amount of current passing through the joining surfaces 102a, 102b.

### [Third Embodiment]

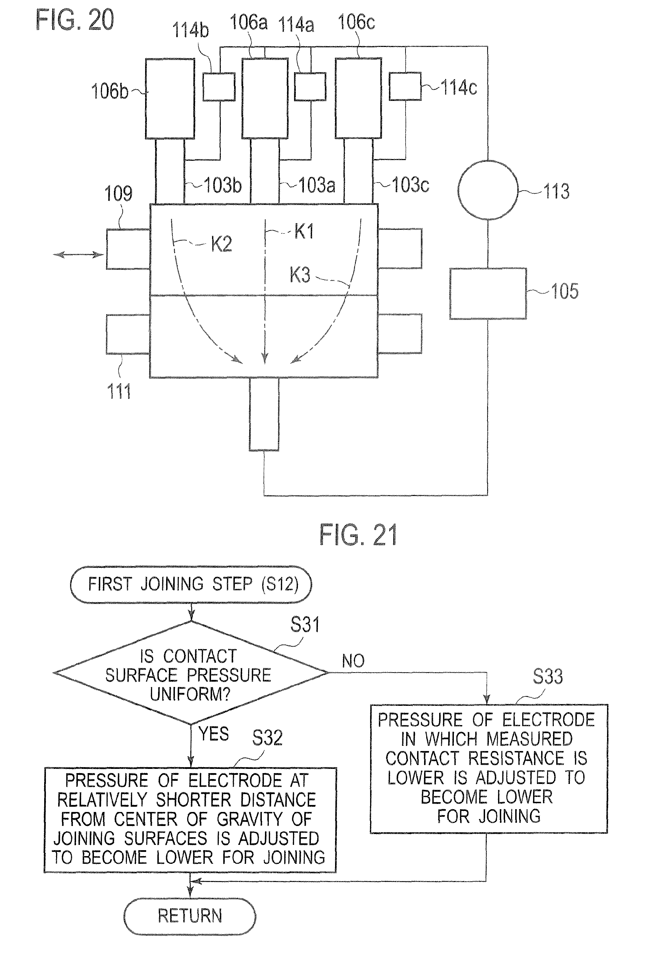

As illustrated in Fig. 20, a joining apparatus 120 according to a third embodiment of the present invention is different from the joining apparatus 100 according to the second embodiment in that the amount of heat produced in plural current paths K1, K2, K3 in the joining members 101a, 101b is controlled by controlling pressures of plural first electrodes 103a, 103b, 103c on the joining member 101a, Incidentally, parts having the same functions as those of the second embodiment are indicated by the same reference numerals, and description of the parts will be omitted in order to avoid a repetition.

In the same manner as the second embodiment, the joining apparatus 120 according to the third embodiment includes the plural (three, as an example in the third embodiment) first electrodes 103a, 103b, 103c as the electrode 103 for supplying a current to the joining member 101a, and is provided with one second electrode 104 for supplying a current to the joining member 101b. Pressing devices 106a, 106b, 106c are individually provided for the first electrodes 103a, 103b, 103c, respectively, and the pressures of the first electrodes 103a, 103b, 103c can be adjusted by individually controlling the pressing devices 106a, 106b, 106c, respectively. The plural pressing devices 106a, 106b, 106c also function as current path adjusting means for adjusting the current paths K1, K2, K3 by varying contact resistance across the first electrodes 103a, 103b, 103c and the joining member 101a.

The current path through which a current flows from the current supply device 105 to the first electrodes 103a, 103b, 103c is provided with the volt meter 113 capable of measuring the voltage of the current supply device 105, and is further provided with the ammeters 114a, 114b, 114c capable of measuring the amount of current flowing to the first electrodes 103a, 103b, 103c, respectively.

Then, measurement signals from the volt meter 113 and the ammeters 114a, 114b, 114c are all inputted to the control device 108. Therefore, the control device 108 can calculate a total resistance value in the three current paths K1, K2, K3 from the first electrodes 103a, 103b, 103c to the second electrode 104, from measured results obtained by the volt meter 113 and the ammeters 114a, 114b, 114c. The total resistance value includes the value of contact resistance across the joining surfaces 102a, 102b, the resistance value of the joining members 101a, 101b in themselves, the value of contact resistance across the first electrode 103a and the joining member 101a, and the value of contact resistance across the second electrode 104 and the joining member 101b, and the ratio of the value of contact resistance across the joining surfaces 102a, 102b of the joining members 101a, 101b to the total resistance value varies according to pressure or the like. Therefore, for example, a reference table may be prepared beforehand by experiment, analysis or the like thereby to calculate the value of contact resistance across the joining surfaces 102a, 102b of the joining members 101a, 101b from the calculated total resistance value according to measured conditions.

In the same manner, the values of contact resistance across the joining surfaces 102a, 102b in the second and third current paths K2, K3 can be detected from a voltage value measured by the volt meter 113 and current values detected by the second and third ammeters 114b, 114c. Thus, the volt meter 113, the ammeters 114a, 114b, 114c and the control device 108 function as a contact resistance detector to calculate the value of contact resistance across the joining surfaces 102a, 102b. Incidentally, the contact resistance detector is not limited to a structure formed by the volt meter 113, the ammeters 114a, 114b, 114c and the control device 108 but may be designed as appropriate, provided that the contact resistance detector can detect the value of contact resistance across the joining surfaces 102a, 102b of the joining members 101a, 101b.

Then, in the first joining step S12, as illustrated in Fig. 21, uniformity in contact surface pressure between the joining surfaces 102a, 102b is determined from the contact resistance value detected by the contact resistance detector. A decision may be made in the following manner: for example, when a difference between the detected contact surface pressures of the joining surfaces 102a, 102b falls within a preset threshold range, the control device 108 determines that the contact surface pressure is uniform; on the other hand, when the difference falls outside the threshold range, the control device 108 determines that the contact surface pressure is not uniform. Incidentally, the threshold value may be set based on experiment, analysis, or the like.

When a decision is made that the contact surface pressure between the joining surfaces 102a, 102b is uniform, the pressing devices 106a, 106b, 106c are controlled so that pressure exerted on the joining member 101a by the electrode at a relatively shorter distance from the center of gravity of the joining surfaces 102a, 102b becomes smaller. In the third embodiment, the first electrode 103a is closer to the center of gravity of the joining surfaces 102a, 102b than the first electrodes 103b, 103c, and therefore, the pressure of the first electrode 103a on the joining member 101a is reduced. This increases the contact resistance across the first electrode 103a and the joining member 101a, and thus reduces the amount of current flowing from the first electrode 103a to the joining member 101a. This reduces the amount of current in the vicinity of the center of gravity of the joining surfaces 102a, 102b in which currents from plural electrodes are likely to superimpose themselves on each other, and thus enables rendering more uniform the amount of current passing through the joining surfaces 102a, 102b. Incidentally, the amount of adjustment of the pressing devices 106a, 106b, 106c may be set based on experiment, analysis, or the like.

When a decision is made that the contact surface pressure between the joining surfaces 102a, 102b is not uniform, the control device 108 controls the pressing device 106 so as to reduce the pressure of the pressing device 106 on the electrode 3 in the vicinity of high contact-surface-pressure sections, or equivalently, the first electrode 103 in which the contact resistance value of the contact surfaces of the joining members 101a, 101b is detected as being low. This increases the contact resistance across the first electrode 103a and the joining member 101a, and thus reduce the amount of current flowing from the first electrode 103a to the joining member 101a. This reduces the amount of current passing through high surface-pressure sections in which current concentration occurs, and thus enables reducing variations in current in the joining surfaces 102a, 102b. The amount of adjustment of the pressing devices 106a, 106b, 106c may be set based on experiment, analysis, or the like.

Incidentally, a configuration provided with the contact resistance detector is not necessarily required for determination of the uniformity in contact surface pressure between the joining surfaces 102a, 102b. Specifically, when before joining it can be seen that the contact surface pressure between the joining surfaces 102a, 102b is uniform, or when before joining it can be seen that the contact surface pressure between the joining surfaces 102a, 102b is not uniform and high contact- surface-pressure sections are found, the processing may be performed in the following manner: without the contact resistance detector determining the uniformity in contact surface pressure, a decision step S31 illustrated in Fig. 21 is omitted, and step S32 or S33 of adjusting the current adjusting units 112a, 112b, 112c is performed.

According to the third embodiment, the current input values of the current input paths (e.g. the three first electrodes 103a, 103b, 103c in the third embodiment) are controlled by adjusting the contact surface pressure between the first electrodes 103a, 103b, 103c for supplying a current to the joining member 101a and the joining member 101a. Thus, the amount of heat produced on the joining surfaces 102a, 102b can be controlled.

Also, the plural first electrodes 103a, 103b, 103c of the same polarity for supplying a current to the joining member 101a are provided, and the pressures of the first electrodes 103a, 103b, 103c on a contact object can be independently controlled. Thus, the amount of heat produced on the joining surfaces 102a, 102b can be controlled.

Also, in the third embodiment, the pressure exerted on the joining member 101a (or the contact object) by the electrode (e.g. the first electrode 103a), of the plural first electrodes 103a, 103b, 103c of the same polarity, at a relatively shorter distance from the center of gravity of the joining surfaces 102a, 102b can be controlled so as to become relatively lower than the pressures of the other electrodes (e.g. the first electrodes 103b, 103c) (see step S32 of Fig. 21). Therefore, when a decision can be made that the contact surface pressure between the joining surfaces 102a, 102b is uniform, the contact resistance across the first electrode 103a at a relatively short distance from the center of gravity and the joining member 101a is increased thereby to reduce the amount of current from the first electrode 103a and thus enable rendering more uniform the amount of current passing through the joining surfaces 102a, 102b.

Also, in the third embodiment, the pressure exerted on the joining member 101a by the first electrode 103, of the plural first electrodes 103a, 103b, 103c of the same polarity, at a relatively shorter distance from relatively high contact-surface-pressure sections of the joining surfaces 102a, 102b can be controlled so as to become relatively lower than the pressures of the other first electrodes 103 (see step S33 of Fig. 21). Therefore, when a decision can be made that the contact surface pressure between the joining surfaces 102a, 102b is not uniform, the amount of current passing through high surface-pressure sections in which current concentration occurs is reduced thereby to cause a current to be shunted to low surface-pressure sections, so that the amount of current passing through the joining surfaces 102a, 102b can be made more uniform.

Also, the contact surface pressure between the joining surfaces 102a, 102b is detected, and the pressure of the first electrodes 103a, 103b, 103c can be controlled based on the detected contact surface pressure. Thus, desirable joining conditions for each of the joining members 101a, 101b can be automatically determined for joining.

Although the embodiments of the present invention have been described above, it should be understood that these embodiments are illustrative only in order to simplify an understanding of the present invention, the present invention is not limited to the embodiments, and the technical scope of the present invention is not limited to specific technical matters disclosed in the above-described embodiments but may embrace various modifications, changes and alternative technologies which may be derived therefrom. For example, in the second and third embodiments, the number of the plural first electrodes 103 may be two or may be four or more. Also, the plural first electrodes 103 may have a structure such that they contact the joining member 101a from different directions rather than from one direction. Further, the structural elements of the above-described embodiments may be used in combination as appropriate. For example, the current path adjusting means (i.e. the joining member fixing bolts 24) according to the first embodiment, the current path adjusting means (i.e. the current adjusting units 112a, 112b, 112c) according to the second embodiment, and the current path adjusting means (i.e. the pressing devices 106a, 106b, 106c) according to the third embodiment may be used in combination as appropriate.

This application is based upon and claims the benefit of priority of the prior Japanese Patent Application No. 2010-143880, filed on June 24, 2010, and Japanese Patent Application No. 2010-279811, filed on December 15, 2010, the entire contents of which are incorporated herein by reference.

### INDUSTRIAL APPLICABILITY

According to the joining method and the joining apparatus according to the present invention, joining is effected by performing resistance heating, while sliding the joining members. Thus, the sliding acts on the high surface-pressure sections heated by the resistance heating to thus cause abrasion, plastic flow and material diffusion and hence a decrease in surface pressure of the high surface-pressure sections and thereby vary current concentration locations from moment to moment. Thereby, the joining surfaces can be uniformly heated, so that the joining surfaces can be uniformly joined throughout their entire area.

### REFERENCE SIGNS LIST

1a, 1b, 101a, 101b joining members
2a, 2b, 102a, 102b joining surfaces
4a, 4b non-contact portions
5 eutectic foil (eutectic reaction material)
7a, 7b positioning holes (positioning portions)
14 positioning member actuator (positioning member actuating means)
11a, 11b positioning pins (positioning members)
10, 100, 120 joining apparatuses
20a, 20b electrodes (current input units, holding members)
103, 103a, 103b, 103c, 103d, 103e first electrodes (current input units)
104, 104a, 104b, 104c, 104d, 104e second electrodes
21a, 21b electrode bodies
23a, 23b electrode plates (current input units)
24 joining member fixing bolts (current path adjusting means, fastening units)
25 bolt through-holes
30, 105 current supply devices (current supply means)
40, 106, 106a, 106b, 106c pressing devices (pressing means)
50, 107 vibrating devices (sliding means)
60, 108 control devices (control means)
70 contact resistance detecting device (contact resistance detector)
80 frictional force detecting device (frictional force detector)
101c eutectic material (eutectic reaction material)
109 holder (holding member, positioning member)
111 fixing unit (holding member, positioning member)
112a, 112b, 112c current adjusting units
113 volt meter
114a, 114b, 114c ammeters
L1 threshold value
L2 threshold value
S1, S11 preliminary vibrating step (preliminary sliding step)
S2 joining step
S2a, S12 first joining step
S2b, S13 second joining step
S3, S14 cooling step
X direction along joining surfaces
Y central axis of electrodes
Z joining surface direction

## Claims

1. A joining method for joining conductive joining members, comprising:
a joining step of causing joining surfaces of the joining members to be joined to each other to face each other, and joining the joining surfaces together by resistance heating by passing a current from one of the joining members to the other of the joining members, while sliding a pair of the joining members relative to each other.

2. The joining method according to claim 1, comprising:
a preliminary sliding step of causing the joining surfaces of the joining members to be joined to each other to face each other, and sliding the pair of joining members relative to each other, without the resistance heating, the preliminary sliding step being performed before the joining step.

3. The joining method according to any one of claims 1 and 2, wherein the joining step includes performing the resistance heating, while effecting relative sliding movement, as well as exerting pressure between the joining surfaces of the joining members facing each other, and thereafter, reducing the pressure and stopping the sliding movement, thereby positioning the joining members with respect to each other.

4. The joining method according to any one of claims 1 to 3, wherein before the joining step, the joining members are positioned by positioning members which define positions with respect to holding members which hold the pair of joining members such that the joining members are slidable with respect to each other.

5. The joining method according to claim 4, wherein the positioning members are positioning members capable of being inserted into positioning portions formed in the joining members, and capable of being advanced from and withdrawn to the holding members, and
the joining members are positioned by inserting the positioning members into the positioning portions of the joining members, and thereafter, before the joining step, the positioning members are withdrawn and pulled out of the positioning portions of the joining members.

6. The joining method according to any one of claims 4 and 5, wherein the positioning members are positioning members capable of being inserted into the positioning portions formed in the joining members, and capable of being advanced from and withdrawn to the holding members, and
after the joining step, the positioning members are inserted into the positioning portions of the joining members.

7. The joining method according to any one of claims 4 to 6, wherein a material having a higher electrical resistance value than that of the joining members and the holding members is used for the positioning members.

8. The joining method according to claim 2, wherein in the preliminary sliding step, contact resistance is detected by a contact resistance detector which detects contact resistance across the joining members to be joined to each other, and, when the detected contact resistance becomes equal to or less than a preset threshold value, the joining step is started.

9. The joining method according to any one of claims 1 to 8, wherein a conductive intermediate material having a lower melting point than that of at least one of the joining members is interposed in between the joining surfaces to be joined to each other.

10. The joining method according to claim 9, wherein the intermediate material is formed in the form of film of varying thicknesses according to part.

11. The joining method according to claim 10, wherein the intermediate material is formed so that the thickness thereof corresponding to relatively low surface-pressure sections of the joining surfaces facing each other, under the action of the pressure exerted therebetween, is relatively larger.

12. The joining method according to any one of claims 1 to 11, wherein the joining step includes reducing the amount of heat produced by the resistance heating and also increasing the amount of frictional heat produced by the sliding, with the passage of joining time.

13. The joining method according to claim 12, wherein the joining step includes performing the resistance heating, while effecting relative sliding movement, as well as exerting pressure between the joining surfaces of the joining members facing each other, and increasing the pressure acting on the joining surfaces, with the passage of joining time.

14. The joining method according to any one of claims 1 to 13, wherein contact resistance across the joining surfaces is adjusted by adjusting current paths by a current path adjusting means for adjusting the current paths in the joining members.

15. The joining method according to any one of claims 1 to 14, wherein in the joining step, contact resistance is detected by a contact resistance which detects the contact resistance across the joining members to be joined to each other, and, when the contact resistance becomes equal to or less than a preset threshold value, the joining step is stopped.

16. The joining method according to any one of claims 1 to 15, wherein in the joining step, a frictional force is detected by a frictional force detector which detects a frictional force between the joining members to be joined to each other, and, when the frictional force becomes equal to or more than a preset threshold value, the joining step is stopped.

17. The joining method according to any one of claims 1 to 16, wherein the sliding of the joining members is effected by a reciprocating motion.

18. The joining method according to any one of claims 1 to 16, wherein the sliding of the joining members is effected by an orbital motion.

19. The joining method according to any one of claims I to 18, wherein the total amount of heat input to the joining members, produced by the resistance heating, is larger than the total amount of heat input to the joining members, produced by frictional heating produced by the sliding.

20. The joining method according to any one of claims 1 to 19, wherein the joining members to be joined to each other are provided with non-contact portions spaced apart, which are surrounded by the joining surfaces.

21. The joining method according to claim 20, wherein the joining surfaces are located outward of an extension line from a central axis of electrodes contacting the joining members.

22. The joining method according to any one of claims 1 to 21, wherein a plurality of current input paths of the same polarity to the joining members are provided, and, when a current is passed through the joining members, a current input value of at least one of the current input paths of the same polarity is independently adjusted.

23. The joining method according to claims 22, wherein when a current is passed through the joining members, the current input value of the current input path is adjusted by independently adjusting the amount of current of at least one of a plurality of electrodes of the same polarity which supply a current to the joining members.

24. The joining method according to claim 23, wherein the amount of current of the electrode, of the plurality of electrodes of the same polarity, at a relatively shorter distance from the center of gravity of the joining surfaces is adjusted so as to be relatively smaller than the amount of current of the other electrode of the same polarity.

25. The joining method according to claim 23, wherein the amount of current of the electrode, of the plurality of electrodes of the same polarity, at a relatively shorter distance from relatively high contact-surface-pressure sections of the joining surfaces is adjusted so as to be relatively smaller than the amount of current of the other electrode of the same polarity.

26. The joining method according to any one of claims 24 and 25, wherein a contact surface pressure between the joining surfaces is detected, and the amount of current of the electrode is adjusted based on the detected contact surface pressure.

27. The joining method according to any one of claims 22 to 26, wherein when a current is passed through the joining members, the current input value of the current input path is adjusted by adjusting a contact surface pressure exerted on the joining members by the electrodes which supply a current to the joining members.

28. The joining method according to claim 27, wherein the current input value of the current input path is adjusted by independently adjusting pressure applied to a contact object by at least one of a plurality of electrodes of the same polarity which supply a current to the joining members.

29. The joining method according to claim 28, wherein pressure applied to the contact object by the electrode, of the plurality of electrodes of the same polarity, at a relatively shorter distance from the center of gravity of the joining surfaces is adjusted so as to be relatively smaller than the of the other electrode of the same polarity.

30. The Joining method according to claim 28, wherein pressure applied to the contact object by the electrode, of the plurality of electrodes of the same polarity, at a relatively shorter distance from relatively high contact-surface-pressure sections of the joining surfaces is adjusted so as to be relatively lower than the pressure of the other electrode of the same polarity.

31. The joining method according to any one of claims 29 and 30, wherein a contact surface pressure the joining surfaces is detected, the pressure of the electrode is adjusted based on the detected contact surface pressure.

32. The joining method according to any one of claims 28 to 31, wherein electrodes of polarities which supply a current to the Joining members, respectively, have different total areas of contact with contact objects, and one joining member supplied with a current from the electrode of polarity having a larger total area of contact is slid.

33. The joining method according to any one of claims 14 and 27, wherein the contact resistance the joining surfaces is adjusted by individually varying axial fastening forces of a plurality of fastening units which the joining members to the electrodes by axial forces.

34. The joining method according to claim 33, wherein the axial fastening forces of the fastening units are larger at a position farther away from the central axis of the electrodes contacting the joining members.

35. The joining method according to claim 33, wherein the axial fastening forces of the fastening units arranged in the vicinity of relatively high surface-pressure locations of the joining surfaces are smaller than the axial fastening forces of the other fastening units.

36. The joining method according to any one of claims 33 to 35, wherein the joining member is fastened by the fastening units to an electrode body which forms the electrode, and a conductive members is interposed in between the joining member and the electrode body electrically connected.

37. A joining apparatus for joining a pair of conductive joining members, comprising:
current input units configured to supply a current to the pair of joining members;
a current supply means for supplying a current to the current input units;
a sliding means for sliding the pair of joining members relative to each other, with joining surfaces of the joining members to be joined to each other caused to face each other; and
a control means for controlling the current supply means and the sliding means so as to perform resistance heating between the joining surfaces facing each other, by supplying the current to the current input units, while sliding the pair of joining members relative to each other.

38. The joining apparatus according to claim 37, wherein the control means controls the sliding means so as to perform a preliminary sliding for sliding The pair of joining members relative to each other, without the resistance heating, before the control means actuates the current supply means and the sliding means so as to perform the resistance heating between the joining surfaces facing each other, by supplying the current to the current input units, while sliding the pair of joining members relative to each other.

39. The joining apparatus according to any one of claims 37 and 38, comprising:
a pressing for exerting pressure between the joining surfaces facing each other,
wherein the control means controls the pressing means and the sliding means so as to position the joining surfaces with respect to each other by reducing the pressure and stopping the sliding, after the control means has actuated the current supply means and the sliding means so as to perform the resistance heating between the joining surfaces facing each other, by supplying the current to the current input units, while sliding the pair of joining members relative to each other.

40. The joining apparatus according to any one of claims 37 to 39, comprising: a
holding members configured to hold the pair of joining members such that the joining members are slidable with respect to each other; and
positioning members configured to define the positions of the joining members with respect to the holding members.

41. The joining apparatus according to claims 40, wherein the (positioning members are positioning members capable of being inserted into positioning portions formed in the joining members, and capable of being advanced from and withdrawn to the holding members,
the joining apparatus includes a positioning member actuating means for effecting the advancing and with drawing of the positioning members, and
the control means controls the positioning member actuating means thereby to withdraw the positioning members and pull the positioning members out of the positioning portions of the joining members, before the control means actuates the current supply means and the sliding means so as to perform the resistance heating between the joining surfaces facing each other, by supplying the current to the current input units, while sliding the pair of joining members relative to each other.

42. The joining apparatus according to any one of claim 40 and 41, wherein the positioning members are positioning members capable of being inserted into the positioning portions formed in the joining members, and capable of being advanced from and withdrawn to the holding members,
the joining apparatus includes a positioning member actuating means for effecting the advancing and withdrawing of the positioning members, and
the control means controls the positioning member actuating means thereby to insert the positioning members into the positioning portions of the joining members, after the control means has actuated the current supply means and the sliding means so as to perform the resistance heating between the joining surfaces facing each other, by supplying the current to the current input units, while sliding the pair of joining members relative to each other.

43. The joining apparatus according to any one of claims 40 to 42, wherein the positioning members are made of a material having a higher electrical resistance value than that of the joining embers and the holding members.

44. The joining apparatus according to claim 38, comprising:
a contact resistance detector configured to detect contact resistance across the joining members to be joined to each other,
wherein before the control means actuates the current supply means and the sliding means so as to supply the current to the current input units while sliding the pair of joining members relative to each other, the control means performs control so that, in the preliminary sliding for sliding the pair of joining members relative to each other, when the contact resistance detected by the contact resistance detector becomes equal to or less than a preset threshold value, the control means actuates the current supply means and the sliding means so as to start the resistance heating between the joining surfaces facing each other, by supplying the current to the current input units, while sliding the pair of joining members relative to each other.

45. The joining apparatus according to any one of claims 37 to 44, comprising:
a pressing means for exerting pressure between the joining surfaces of the joining members facing each other,
wherein the control means increases the pressure of the pressing means with the passage of time, after the control means has actuated the current supply means and the sliding means so as to start the resistance heating between the joining surfaces facing each other, by supplying the current to the current input units, while sliding the pair of joining members relative to each other.

46. The joining apparatus according to any one of claims 37 to 45, comprising:
a current path adjusting means for varying current paths in the joining members.

47. The joining apparatus according to claim 46, wherein the current input units are electrodes configured to supply a current to the jointing members, and
the current path adjusting means is two or more fastening units configured to fasten the joining members to the electrodes by axial forces.

48. The joining apparatus according to any one of claims 37 to 47, comprising:
a contact resistance detector configured to detect contact resistance across the joining members to be joined to each other,
wherein after the control means has actuated the current supply means and the sliding means so as to perform the resistance heating between the joining surfaces facing each other by supplying the current to the current input units while sliding the pair of joining members relative to each other, the control means stops the current supply means and the sliding means when the contact resistance detected by the contact resistance detector becomes equal to or less than a preset threshold value.

49. The joining apparatus according to any one of claims 37 to 47, comprising:
a frictional force detector configured to detect a frictional force between the joining members to be joined to each other,
wherein after the control means has actuated the current supply means and the sliding means so as to perform the resistance heating between the joining surfaces facing each other by supplying the current to the current input units while sliding the pair of joining members relative to each other, the control means stops the current supply means and the sliding means when the frictional force detected by the frictional force detector becomes equal to or more than a preset threshold value.

50. The joining apparatus according to any one of claims 37 to 49, wherein the sliding by the sliding means is a reciprocating motion.

51. The joining apparatus according to any one of claims 37 to 49, wherein the sliding by the sliding means is an orbital motion.

52. The joining apparatus according to any one of claims 37 to 51, comprising:
a pressing means for exerting pressure between the joining surfaces of the joining members facing each other,
wherein the control means controls at least one of the current supply means, the sliding means and the pressing means so that the total amount of heat input to the joining members, produced by the resistance heating, is larger than the total amount of heat input to the joining members, produced by frictional heating produced by the sliding.

53. The joining apparatus according to any one of claims 37 to 52, wherein the current input units define a plurality of current input paths to the joining members, and are capable of adjusting the amount of current of at least one of the current input paths.

54. The joining apparatus according to claim 53, wherein the current input units are a plurality of electrodes of the same polarity configured to supply a current to the joining members, and include current adjusting units configured to adjust the amount of current of at least one of the plurality of electrodes.

55. The joining apparatus according to claim 53, wherein the current input units are a plurality of electrodes of the same polarity configured to supply a current to the joining members, and include a pressing means capable of adjusting pressure applied to a contact object by at least one of the plurality of electrodes.

56. The joining apparatus according to claim 53, comprising:
a current path adjusting means for varying current paths in the joining members,
wherein the current path adjusting means is two or more fastening units configured to fasten the joining members to the electrodes by axial forces.

57. The joining apparatus according to claim 56, wherein the electrode includes an electrode body fastened to the joining member by the fastening units, and a conductive member interposed in between the joining member and the electrode body electrically connected.

58. The joining apparatus according to any one of claims 53 to 57, wherein electrodes of polarities which supply a current to the joining members, respectively, have different total areas of contact with contact objects, and the sliding device effects sliding of one joining member supplied with a current from the electrode of polarity having a larger total area of contact.
